(19) Europäisches Patentamt
European Patent Office
Office européen des brevets

(11) EP 3 587 142 A1

(12) EUROPEAN PATENT APPLICATION
published in accordance with Art. 153(4) EPC

(43) Date of publication:
01.01.2020 Bulletin 2020/01

(51) Int Cl.:
B60C 9/00 (2006.01)     D01F 8/06 (2006.01)

(21) Application number: 18758450.3

(22) Date of filing: 22.02.2018

(86) International application number:
PCT/JP2018/006371

(87) International publication number:
WO 2018/155530 (30.08.2018 Gazette 2018/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 22.02.2017 JP 2017031586

(71) Applicant: Bridgestone Corporation
Tokyo 104-8340 (JP)

(72) Inventors:
• NAKAMURA, Masaaki
Tokyo 104-8340 (JP)
• WATANABE, Toshiyuki
Tokyo 104-8340 (JP)

(74) Representative: Oxley, Robin John George
Marks & Clerk LLP
15 Fetter Lane
London EC4A 1BW (GB)

(54) PNEUMATIC TIRE

(57) Provided is a pneumatic tire in which, by improving adhesion between a rubber and fibers for a reinforcing layer that is arranged in such a manner to extend from a tire radial-direction inner side of a belt layer in an end region of a tread portion toward an inner side of a tire radial direction along a carcass ply, not only the durability is further improved as compared to conventional tires but also the rolling resistance is reduced. The pneumatic tire includes: at least one carcass ply (2); and at least one belt layer (3) arranged on a tire radial-direction outer side of the carcass ply (2) in a crown portion, in which pneumatic tire a reinforcing layer (4) extending from the tire radial-direction inner side of the belt layer in the end region of the tread portion toward the inner side of the tire radial direction along the carcass ply is arranged, and core-sheath type composite fibers (C), whose core portion is composed of a high-melting-point resin (A) having a melting point of 150°C or higher and sheath portion is composed of a resin material (B) that contains an olefin-based polymer (D) having a melting point of not higher than a tire vulcanization temperature, are embedded in the reinforcing layer.

FIG. 1

**Description**

TECHNICAL FIELD

The present invention relates to a pneumatic tire (hereinafter, also simply referred to as "tire").

BACKGROUND ART

Conventionally, in tires primarily composed of rubber and main cord reinforcing layers such as a tire carcass ply and a belt layer, it is known that a buffer layer made of a rubber member, which is generally called belt under-cushion, is arranged in the tire radial direction between a lower end surface of the belt layer and the carcass ply. As member properties required for a tire part in the vicinity of such a belt under-cushion rubber portion, the member used for the belt under-cushion is demanded to have durability against deterioration caused by running while suppressing detachment of a belt end portion from the carcass ply during tire running and to be capable of buffering, for example, detachment occurring between a lower end surface of a belt and the carcass ply as well as strain in a compression direction, and a cushion member made of rubber is used in common tires.

Meanwhile, studies have conventionally been made on a technology for improving the uniformity and enhancing the driving stability by arranging, in place of or in addition to a belt under-cushion rubber member positioned between a lower end surface of a belt layer and a carcass ply, a reinforcing layer composed of organic fiber cords such that it extends along the carcass ply.

This is because, by arranging a reinforcing layer composed of organic fiber cords such that it extends along the carcass ply and thereby improving the rigidity of the carcass ply from the lower surface of a tread-portion belt layer of the tire ground-contact surface toward shoulder portions, deflection of the carcass ply that is compressed in its cord direction from the tire shoulder portions toward the lower end surface of the belt layer by a compressive force applied to side wall portions on both sides of the tire due to a load coming from the vehicle weight and the like can be suppressed, as a result of which vibrations generated by repeated compressive deformation due to rolling of the tire can be reduced and an effect of improving the tire characteristics such as uniformity can be obtained.

Accordingly, technologies have conventionally been proposed in which, by arranging a reinforcing layer composed of twisted cords made of nylon 66 as organic fiber cords such that it extends along a carcass ply from a position in an end region of a tread portion between a lower surface of a belt and the carcass ply to each shoulder portion of a tire, problems associated with side irregularities caused by joint portions of the carcass ply and disturbance in the distribution of the number of incorporated cords (end count) are remedied, whereby the uniformity is improved and the driving stability is further enhanced.

Further, for example, Patent Document 1 discloses a tire including at least one, preferably at least two carcass-type reinforcing structures one of which is positioned on the inner side and the other of which is positioned on the outer side, each extending in the circumferential direction from a bead to a side wall and being anchored in the bead on each side of the tire, wherein the tire further includes at least one circumferential bielastic reinforcing element made of a bielastic fabric and the bielastic reinforcing element is positioned in such a manner to extend substantially parallel to a portion of the reinforcing structures.

Meanwhile, as tire reinforcing materials, a variety of materials such as organic fibers and metal materials have been examined and used. In addition, as one type of organic fiber, the use of a so-called "core-sheath fiber", whose cross-sectional structure is constituted by a core portion forming the center and a sheath portion covering the periphery of the core portion, as a reinforcing material has been examined in various studies. For example, Patent Document 2 discloses a cord-rubber composite obtained by embedding a cord in an unvulcanized rubber and integrating them by vulcanization, which cord is composed of a core-sheath type fiber that contains a resin selected from at least one of polyesters, polyamides, polyvinyl alcohols, polyacrylonitriles, rayons and heterocycle-containing polymers as a core component and a thermoplastic resin that is thermally fusible with rubber as a sheath component.

RELATED ART DOCUMENTS

PATENT DOCUMENTS

[Patent Document 1] JP2009-513429A (Claims, etc.)
[Patent Document 2] JPH10-6406A (Claims, etc.)

## SUMMARY OF THE INVENTION

### PROBLEMS TO BE SOLVED BY THE INVENTION

However, in the above-described tires using a conventional reinforcing layer, twisted organic fiber cords conventionally used for tire reinforcement are employed as reinforcing cords of the reinforcing layer. Therefore, even when the cord material is surface-treated for adhesion with rubber, there are still problems that cutting of the cord material, which is performed for arranging the cord material at a desired size in the rubber for the use as the reinforcing layer, generates a non-surface-treated portion on the cut-end surface, and that a crack is thus likely to be generated from this end surface of the cord material when a strain beyond the limit is applied as a load depending on the tire or the tire running conditions due to, for example, an increase in tire deflection under low-internal-pressure or high-speed running conditions.

The reason for this is because, when such a reinforcing layer is arranged such that it extends along the carcass ply from a position in an end region of the tread portion between the belt lower surface and the carcass ply to each shoulder portion of the tire, since compressive deformation occurs from the shoulder portions on both sides toward the tread belt layer end portions during rolling of the tire under load and/or lifting of the reinforcing layer occurs due to a force acting in the direction of pulling out the organic fiber cords of the reinforcing layer at the time when, for example, the tread surface in contact with the ground kicks out the ground during running, a crack is generated in the rubber due to a rigidity difference between the cord end portions of the reinforcing layer and the surrounding rubber, as a result of which a problem of detachment of the belt ends of the tread portion from the carcass ply of the shoulder portions is likely to occur.

With regard to ever-increasing input of strain in association with recent performance improvements in tires and the like, it is difficult to say that a tire, in which a reinforcing layer that includes an end portion not surface-treated for rubber adhesion on the surface of a cord material is arranged, has sufficient crack resistance.

Moreover, as a conventional tire, there is also known a case where, using twisted organic fiber cords normally used for tire reinforcement as a reinforcing layer, a radial-direction outer end of the reinforcing layer is sandwiched between a carcass and a belt layer while a radial-direction inner end of the reinforcing layer is sandwiched between a ply main body and a ply turn-up portion of the carcass ply. The reason for this is because, in high-speed running over a prolonged period, a buttress portion positioned between a maximum-width point of a side wall portion of the tire and a belt end of a tread portion coming into contact with the ground is generally pushed up, and a centrifugal force and the like induce lifting of a shoulder portion of the tire in high-speed running, as a result of which the durability tends to be reduced. It has been proposed to sandwich the ends of the cord reinforcing layer in the above-described manner so as to suppress lifting of the cord reinforcing layer, thereby improving not only the high-speed durability in a step-speed method but also the durability in continuous high-speed running that better resembles the actual use.

However, while such pull-out of the cord ends from the cord reinforcing layer due to lifting of the shoulder portion is made unlikely to occur by sandwiching the radial-direction inner end between the ply main body and the ply turn-up portion of the carcass ply, deformation of rubber between the cords becomes large and the energy loss due to hysteresis loss caused by such deformation is increased by allowing a tire to have a structure in which such a reinforcing layer is disposed in multiple layers, as a result of which the rolling resistance of the tire is exacerbated. Therefore, there is a strong demand for a fiber material used for rubber reinforcement, which enables to sufficiently maintain adhesion between a rubber of cord end portions and fibers without cause cord ends of a cord reinforcing layer to be pulled out due to lifting of a shoulder portion even when the ends of the cord reinforcing layer are not sandwiched.

In view of the above, an object of the present invention is to provide a pneumatic tire in which, by improving the adhesion between a rubber and fibers for a reinforcing layer that is arranged in such a manner to extend from a tire radial-direction inner side of a belt layer in an end region of a tread portion toward an inner side of a tire radial direction along a carcass ply, not only the durability is further improved as compared to conventional tires but also the rolling resistance is reduced.

### MEANS FOR SOLVING THE PROBLEMS

The present inventors intensively studied to discover that the above-described problems can be solved by applying specific core-sheath type composite fibers (hereinafter, also simply referred to as "core-sheath fibers") to a reinforcing layer that is arranged in such a manner to extend from a tire radial direction inner side of a belt layer in an end region of a tread portion toward an inner side of a tire radial direction along a carcass ply, thereby completing the present invention.

That is, a pneumatic tire of the present invention includes: a pair of bead portions in each of which a bead core is embedded; a pair of side wall portions continuously extending on a tire radial-direction outer side from the respective bead portions; and a tread portion that extends between the pair of the side wall portions and forms a ground-contacting portion,
the pneumatic tire being characterized in that:

the pneumatic tire further includes at least one carcass ply that toroidally extends between the pair of the bead cores, and at least one belt layer arranged on the tire radial direction outer side of the carcass ply in a crown portion; a reinforcing layer extending along the carcass ply toward an inner side of a tire radial direction is arranged on a tire radial direction inner side of the belt layer in an end region of the tread portion; and core-sheath type composite fibers (C), whose core portion is composed of a high-melting-point resin (A) having a melting point of 150°C or higher and sheath portion is composed of a resin material (B) that contains an olefin-based polymer (D) having a melting point of not higher than a tire vulcanization temperature, are embedded in the reinforcing layer.

In the tire of the present invention, it is preferred that the olefin-based polymer (D) contains at least one component selected from the group consisting of a propylene-$\alpha$-olefin copolymer (H), a propylene-nonconjugated diene copolymer (I), an ionomer (J) in which an olefin-based copolymer containing a monomer of an unsaturated carboxylic acid or an anhydride thereof has a degree of neutralization with a metal salt of 20% or higher, and an olefin-based homopolymer (K). In the tire of the present invention, it is also preferred that the resin material (B) contains: the olefin-based polymer (D); and at least one selected from a styrene-based elastomer (L) containing a monomolecular chain in which mainly styrene monomers are arranged in series, a vulcanization accelerator (M), a vulcanization accelerating aid (N), and a filler (O). Further, in the tire of the present invention, it is preferred that the styrene-based elastomer (L) contains a styrene-based block copolymer, or a hydrogenation product or modification product thereof.

Still further, in the tire of the present invention, it is preferred that the high-melting-point resin (A) contains a polymer selected from a polyolefin resin (P) and a polyester resin (Q), which have a melting point of 150°C or higher. Yet still further, in the tire of the present invention, the composite fibers have a fineness of, for example, preferably 50 to 4,000 dtex, more preferably 500 to 1,200 dtex. Yet still further, in the tire of the present invention, an end count of the composite fibers (C) is preferably 5 to 65 fibers/50 mm.

Yet still further, in the tire of the present invention, it is preferred that a tire radial-direction outer end of the reinforcing layer be positioned between the belt layer in the end region of the tread portion and the carcass ply, and a tire radial-direction inner end of the reinforcing layer be arranged on the tire radial-direction outer side than a tire maximum width position P.

Yet still further, in the tire of the present invention, it is preferred that a length La (mm) along the reinforcing layer from the tire radial-direction outer end of the reinforcing layer to a tire width-direction outermost point of a region where the reinforcing layer is sandwiched between the belt layer and the carcass ply, a length Lb (mm) along the reinforcing layer from the tire radial-direction outer end of the reinforcing layer to a tire width-direction end of the belt layer, a length Lc (mm) along the reinforcing layer from the tire radial-direction outer end of the reinforcing layer to the tire radial-direction inner end of the reinforcing layer, and a belt width Bw (mm) along a belt that is the innermost belt of the belt layer and adjacent to the carcass ply satisfy the following Formulae (1) to (4):

$$0 < La < Bw \times 1/3 \qquad (1);$$

$$Lb > 0 \qquad (2);$$

$$Lc \geq 10 \qquad (3);$$

and

$$(Lc - Lb) \leq 50 \text{ mm} \qquad (4).$$

EFFECTS OF THE INVENTION

According to the present invention, by improving the adhesion between a rubber and fibers for a reinforcing layer that is arranged in such a manner to extend from a tire radial-direction inner side of a belt layer in an end region of a tread portion toward an inner side of a tire radial direction along a carcass ply, a pneumatic tire in which, through suppression of crack generation from an end surface of the reinforcing layer, not only the durability is further improved as compared to conventional tires but also the rolling resistance is reduced, can be realized.

BRIEF DESCRIPTION OF THE DRAWINGS

[FIG. 1] FIG. 1 is a widthwise half cross-sectional view illustrating one example of a pneumatic tire of the present invention.

[FIG. 2] FIG. 2 is a widthwise half cross-sectional view illustrating another example of a pneumatic tire of the present invention.

[FIG. 3] FIG. 3 is an enlarged widthwise partial cross-sectional view illustrating a reinforcing layer arrangement site of the pneumatic tire illustrated in FIG. 1.

[FIG. 4] FIG. 4 is a fluorescence micrograph showing a longitudinal end of a rubber-resin composite obtained in one Example.

[FIG. 5A] FIG. 5A is a front view illustrating one example of an inserter cap used for producing a fiber-rubber composite used in a reinforcing layer of the present invention.

[FIG. 5B] FIG. 5B is a cross-sectional view taken along a line A-A in FIG. 5A.

[FIG. 6A] FIG. 6A is a front view illustrating another example of an inserter cap used for producing a fiber-rubber composite used in a reinforcing layer of the present invention.

[FIG. 6B] FIG. 6B is a cross-sectional view taken along a line B-B in FIG. 6A.

MODE FOR CARRYING OUT THE INVENTION

Embodiments of the present invention will now be described in detail referring to the drawings.

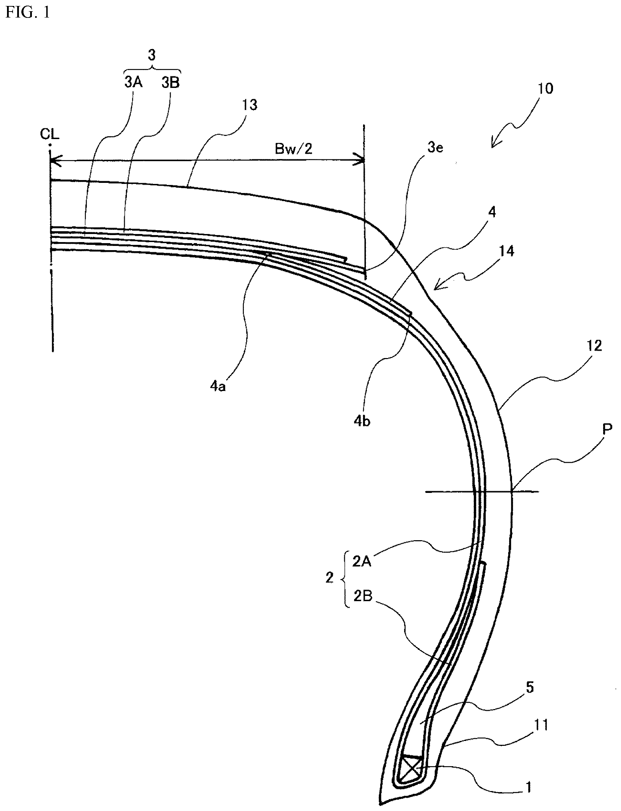

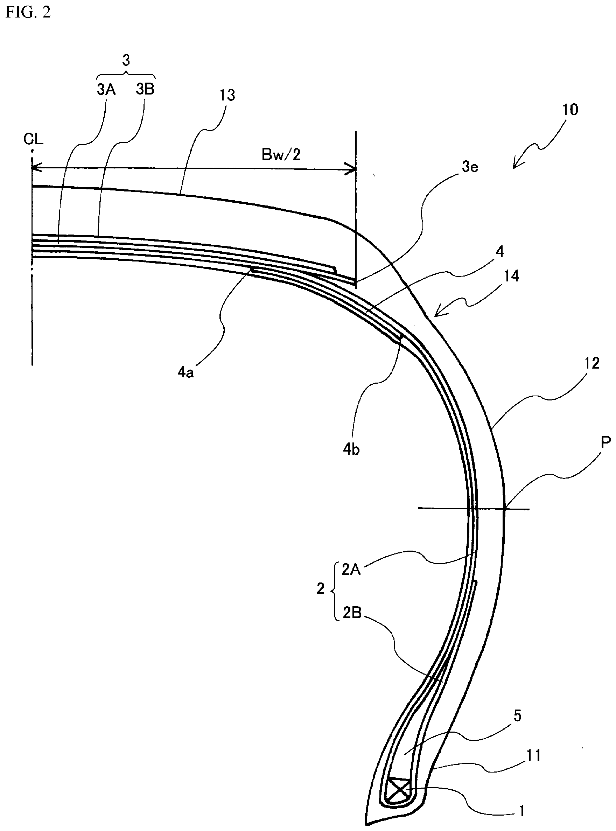

FIGs. 1 and 2 are widthwise half cross-sectional views each illustrating one example of a pneumatic tire of the present invention. An illustrated pneumatic tire 10 of the present invention includes: a pair of bead portions 11 in each of which a bead core 1 is embedded; a pair of side wall portions 12 that continuously extend on a tire radial-direction outer side from the respective bead portions 11; and a tread portion 13 that extends between the pair of the side wall portions 12 and forms a ground-contacting portion. A symbol CL in these figures represents a tire equatorial plane.

Parts positioned between the tread portion 13 forming the ground-contacting portion and each side wall portion 12 on a tire axial-direction outer side of the tread portion 13, in which parts the tire cross-section has a rounded shoulder shape in a range where the radius of curvature of a carcass is the smallest between the equatorial plane of the tread portion and a maximum width of each side wall portion 12, are defined shoulder portions 14.

The tire of the present invention further includes: at least one carcass ply 2 (for example, one to three carcass plies 2; one carcass ply 2 in the illustrated example) constituted by a ply main body 2A that toroidally extends between the pair of the bead cores 1 and ply turn-up portions 2B that are folded and rolled up around the bead cores 1 from the inside toward the outside of the tire; and a belt layer 3 that is constituted by at least one layer of belt (for example, two to six layers of belts; two layers of belts 3A and 3B in the illustrated example) arranged on the tire radial-direction outer side of the carcass ply 2 in a crown portion.

Further, the tire of the present invention is characterized in that a reinforcing layer 4 extending toward an inner side of the tire radial direction along the carcass ply 2 is arranged on the tire radial-direction inner side of the belt layer 3 in an end region of the tread portion 13, and that this reinforcing layer 4 is composed of the below-described specific core-sheath fibers. In the example illustrated in FIG. 1, the reinforcing layer 4 is arranged on the tire radial-direction inner side of the belt layer 3 in the end region of the tread portion 13 in such a manner to extend on the tire radial-direction outer side of the carcass ply 2 toward the inner side of the tire radial direction along the carcass ply 2.

In the tire of the present invention, deflection of the carcass ply 2 compressed in the cord direction from the shoulder portions 14 toward a lower end surface of the belt layer 3, which is caused by compressive deformation from the shoulder portions 14 on both sides toward the respective ends of the belt layer 3 in the tread portion during rolling of the tire under load, can be suppressed by, as illustrated, arranging the reinforcing layer 4 on the tire radial-direction inner side of the belt layer 3 in the end region of the tread portion 13 in a section ranging from this end region to each shoulder portion 14 of the tire along the carcass ply 2. Therefore, not only the tire properties such as uniformity are improved through reduction of vibrations generated by repeated compressive deformation due to rolling of the tire, but also the strain deformation of the cords that is repeated by rolling of the tire is reduced, as a result of which the energy loss due to strain deformation can be suppressed and a rolling resistance-improving effect can be obtained. Meanwhile, a force is applied in a direction of pulling out organic fiber cords of the reinforcing layer 4 at the time when the tread surface in contact with the ground kicks out the ground during running; however, as described below, since the cord cut ends of the reinforcing layer 4 according to present invention are fused together, a crack originating from the cord cut ends of the reinforcing layer 4 is not generated, so that the durability of the tire can be improved.

In the tire 10 of the present invention, at least one carcass ply 2 formed by parallelly-aligned cut cords is toroidally arranged with its side part being rolled back around the bead cores 1 of the bead portions 11, and at least one belt layer 3 is arranged on the tire radial-direction outer side of the carcass ply 2 in the crown portion. In addition, the side wall portions 12 and the shoulder portions 14 extending on the tire radial-direction outer side of the side wall portions 12 are arranged between the bead portions 11 and the tread portion 13. Moreover, in the illustrated examples, the reinforcing layer 4 is arranged such that its tire radial-direction outer end 4a is positioned between the belt layer 3 and the carcass ply 2 in the end region of the tread portion 13 and its tire radial-direction inner end 4b is positioned on the tire radial-direction outer side than a tire maximum width position P. In the present invention, even when the shoulder portions are lifted, the cord end portion according to the present invention can be ensured to be durable through fusion; therefore, the durability against cracking of the cord end portion can be ensured in a buttress portion that is on the tire radial-direction outer side than the tire maximum width position P and pushed up during high-speed running. By enabling to arrange the cord end 4b of the reinforcing layer 4 on the tire radial-direction outer side than the tire maximum width position P, as described below, an effect of reducing the width of the reinforcing layer 4 to be arranged and thereby reducing the tire weight and the rolling resistance can be attained, which is preferred.

The expression "the reinforcing layer 4 extends toward the inner side of the tire radial direction along the carcass ply 2" means that reinforcing cords of the reinforcing layer 4 and the carcass ply 2 are aligned substantially in parallel to each other. Further, the expression "aligned substantially in parallel" means that gaps between the reinforcing cords of the reinforcing layer 4 and the carcass ply 2 that are parallel and adjacent to each other is 4 mm or less, preferably 1 mm or less.

In the present invention, the reinforcing cords of the reinforcing layer 4 can be arranged in any direction at an angle of 0° to 90° with respect to the tire radial direction. The angle is preferably 0° to 75°, more preferably 3° to 75°, with respect to the tire radial direction. Further, the reinforcing layer 4 can be arranged on the tire radial-direction outer side of the carcass ply 2 as illustrated in FIG. 1, or on the tire radial-direction inner side of the carcass ply 2 as illustrated in FIG. 2, in such a manner to extend toward the inner side of the tire radial direction along the carcass ply 2.

The reinforcing cords of the reinforcing layer 4 are preferably arranged in parallel to each other such that the cords do not intersect with each other to be fused together, and the reinforcing layer 4 can be produced, for example, as follows. That is, first, a sheet composed of rubber-coated cords parallelly arranged in the cord lengthwise direction is produced by, for example, the production method described in WO 2010/119861 in which rolling rolls for sheet members and rubber-coated cords are used, or the production method described in JP2006-027068A in which an insulation-type rubber coating head that directly coats a rubber onto plural cords aligned by an extruder is used. Next, by a processing method known in conventional tire production, strips (fiber-rubber composite) are cut out from the thus obtained sheet of rubber-coated cords at an arbitrarily set angle, and the thus cut strips are joined together longitudinally or laterally along a planar direction, whereby a sheet of a sheet-form fiber-rubber composite, which has arbitrary width and length or angle and is referred to as "treat", is produced. The reinforcing layer 4 can be arranged along the carcass ply 2 by, for example, a method of pasting the thus obtained treat of rubber-coated cords to the carcass ply.

It is noted here that the reinforcing layer 4 can also be arranged in plural layers by, for example, pasting together plural treats onto the carcass ply in the upper direction of the sheet surface. Further, when the reinforcing layer 4 is pasted in plural layers, treats cut at different angles can be pasted together to arrange reinforcing cords in an intersecting manner (so-called "intersecting layers"). In the present invention, however, the number of such treats is preferably one from the standpoint of reducing the tire weight. Still, in cases where plural treats need to be arranged depending on the intended purpose other than weight reduction, plural layers of such treats can be pasted.

When a fiber-rubber composite is produced using the above-described insulation-type rubber coating head, cords can be provided in various arrangement forms at a cross-section perpendicular to the cord lengthwise direction, depending on the arrangement of cord passage holes of a cap called "inserter".

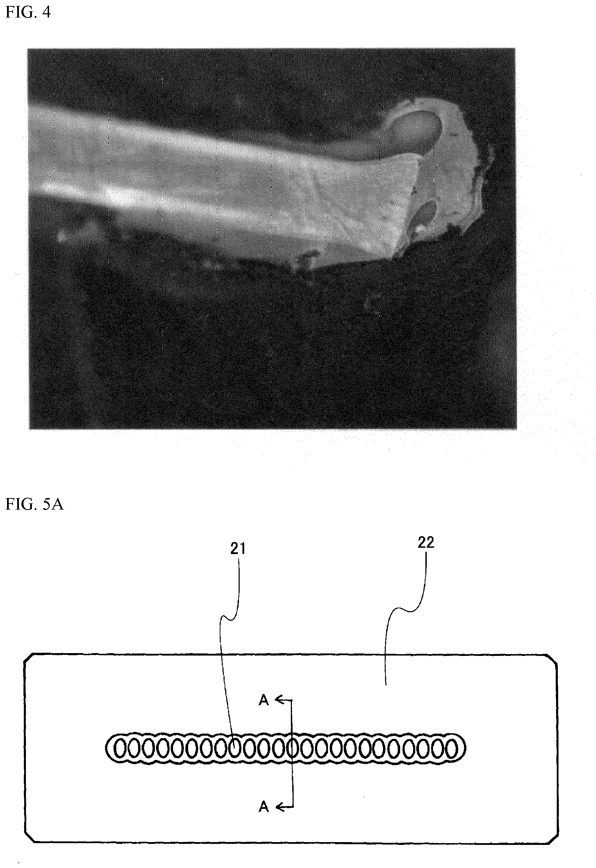

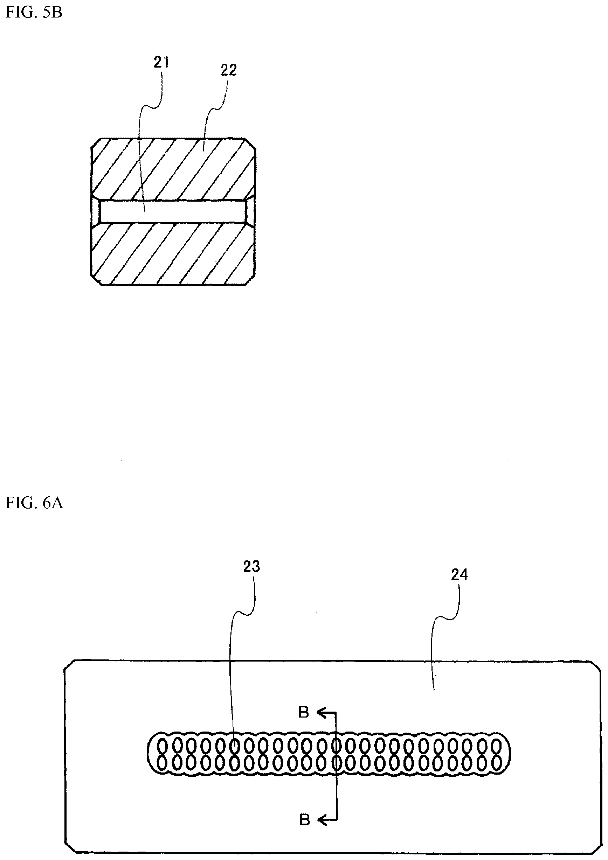

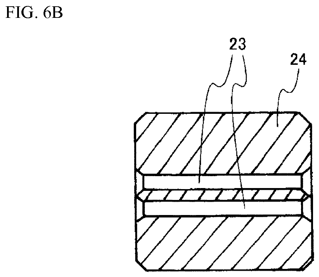

A method of arranging these cords is not particularly restricted, and the fiber-rubber composite used in the reinforcing layer 4 of the present invention can be produced using, for example, such an inserter cap 22 as illustrated in FIGs. 5A and 5B in which twenty-four passage holes 21 are provided in a single row at a cross-section perpendicular to the cord direction. In this case, a fiber-rubber composite in which plural cords are arranged in a single row can be obtained. Alternatively, by using such an inserter cap 24 as illustrated in FIGs. 6A and 6B in which passage holes 23 are provided in two or more rows at a cross-section perpendicular to the cord direction, a fiber-rubber composite in which cords are arranged in plural rows can be obtained. The passage holes of these inserter caps can be provided in a variety of arrangements other than the form of an orthogonal row(s), such as a random arrangement or a staggered arrangement in which rows are displaced from one another.

In the present invention, the cords are preferably arranged in a single row since, when the cords are arranged in plural rows, the thickness of the treat (fiber-rubber composite) is increased and this leads to an increase in the amount of rubber in the reinforcing layer 4, consequently increasing the weight of the tire. From the standpoint of weight reduction, when a required number of cords is arranged, the number of rows of the cords is preferably as small as possible; however, for example, in such a case where a large number of cords are arranged in one row and the cords are thus nearly in contact with one another due to excessively small gaps therebetween, the cords can be arranged in plural rows.

When the reinforcing cords of the reinforcing layer 4 are arranged at an angle of larger than 75° with respect to the tire radial direction and the number of intersecting points at which the carcass ply 2 crosses with the reinforcing cords of the reinforcing layer 4 is thereby increased, the strain energy loss of the rubber between the cords increases as the number of such intersecting points is increased, and this exacerbates the rolling resistance, which is not preferred. Therefore, the smaller the angle of the reinforcing cords with respect to the tire radial direction, the lower becomes the rolling resistance and the more preferred it is.

When the treats intersect, the in-plane rigidity of the treats is increased and lifting of the buttress portion of the tire is reduced; therefore, the arrangement angle of the reinforcing cords is preferably large within 60° with respect to the tire radial direction. Meanwhile, effects attributed to the rigidity of the arranged cords can be obtained even at an intersecting angle of smaller than 3° with respect to the tire radial direction; however, this makes the angle formed by the carcass ply 2 and the cords of the reinforcing layer 4 small and, since the rigidity for maintaining the cord gaps is reduced and deformation in which the gaps of the ply cords in the treat plane is thereby likely to be increased, the intersecting angle is preferably 3° or larger.

It is noted here that, even when the reinforcing cords of the reinforcing layer 4 are arranged at an angle of 0° with respect to the tire radial direction such that the reinforcing cords are parallel to the cords of the carcass ply 2, the sheets of the fiber-rubber composite cannot maintain an angle of 0° from each other due to a processing stress in molding or vulcanization performed in the tire production; therefore, an effect of maintaining the cord gaps of the carcass ply can be provided by the cords of the present invention.

It is preferred that the tire radial-direction outer end 4a of the reinforcing layer 4 be arranged between the carcass ply 2 and the belt layer 3. In this case, the reinforcing layer 4 may be terminated in any mode between the carcass ply 2 and the belt layer 4, as long as the reinforcing layer 4 is terminated being sandwiched by the carcass ply 2 and the belt layer 3 or the reinforcing layer 4 is terminated at a position between the carcass ply 2 and the belt layer 3 that sandwich a rubber. It is particularly preferred that the reinforcing layer 4 be terminated being sandwiched by the carcass ply 2 and the belt layer 3.

Further, it is preferred that the tire radial-direction inner end 4b of the reinforcing layer 4 be positioned on the tire radial-direction outer side than the tire maximum width position P. Still further, it is preferred that a terminal portion of the tire radial-direction inner end 4b of the reinforcing layer 4 extends along the carcass ply 2.

The reason for this is as follows. That is, when the tire radial direction inner end 4b is positioned on the tire radial-direction outer side than the tire maximum width position P, the reinforcing layer 4 of the carcass ply 2 can suppress deflection of the vicinity of the ground contact surface; however, when the tire radial-direction inner end 4b is positioned on the tire radial-direction inner side than the tire maximum width position P, the number of intersecting points at which the reinforcing cords of the reinforcing layer 4 cross with the carcass ply 2 is increased despite the deflection of the vicinity of the ground contact surface is not suppressed for a section of the reinforcing layer 4 that extends further on the tire radial-direction inner side than the tire maximum width position P. Accordingly, the strain energy loss of the rubber between cords is consequently increased at these intersecting points and the rolling resistance is exacerbated, which is not preferred.

In the present invention, the term "strain energy loss" refers to a "value obtained by multiplying the stress/strain (a) of each element by the loss (b) and the volume (c) of its material" as described in JP5745952B2.

In the present invention, as the reinforcing layer 4, a cord material is arranged along the carcass ply 2 for the purpose of suppressing deflection; however, even if the deflection caused by repeated strain deformation of the cords during rolling of the tire is decreased and the "strain stress (a) is reduced" because of the benefit of the enhancement of the rigidity by the reinforcing layer 4 in suppressing the deformation of the carcass ply 2 and reducing the strain stress, when the "hysteresis loss (b) of the material due to strain" of the reinforcing layer 4 is increased or the "volume (c)" of the arranged reinforcing layer is increased and the value obtained by multiplying these three factors is consequently increased, the strain energy loss is large and the rolling resistance during running is thus high.

Therefore, attention must be paid to that the "amount of the hysteresis loss (b) of the material based on the arrangement of the reinforcing layer 4" and an "increase in the volume (c) by the arrangement of the reinforcing layer 4" have a disadvantage of increasing the energy loss and exert conflicting effects.

The former "amount of the hysteresis loss (b) of the material based on the arrangement of the reinforcing layer 4" tends to be increased as the number of points at which the cords of the carcass ply 2 and the cords of the reinforcing layer 4 intersect with each other in close proximity increases. The reason for this is because, since deformation of the rubber between the intersecting cords that are close to each other is relatively large even when the same strain is applied to the respective materials, the generation of heat tends to be increased as the number of points at which the cords intersect with each other in close proximity increases.

In order to minimize the number of points at which the cords intersect with each other in close proximity, it is preferred to, for example, a) reduce the area/range where the carcass ply 2 and the reinforcing layer 4 intersect, b) reduce the angle at which the carcass ply 2 and the cords of the reinforcing layer 4 intersect, and/or c) reduce the end count of the below-described core-sheath fibers. Further, with regard to the latter "increase in the volume (c) by the arrangement of the reinforcing layer 4", the smaller the range where the reinforcing layer 4 is arranged, the more preferred it is.

Due to the above-described reasons, the use of the reinforcing layer 4 generally increases the number of cord intersecting points and thus tends to exacerbate the rolling resistance. However, in such a limited range as the arrangement range of the reinforcing layer 4 according to the present invention, the rolling resistance can be improved at those positions where the benefit of suppressing deformation of the tire structure, such as deflection of the carcass ply 2, and reducing strain is more efficiently attained than the disadvantage of increasing the number of cord intersecting points and consequently exacerbating the rolling resistance caused by rolling under load.

Therefore, in the present invention, with regard to the arrangement range of the reinforcing layer 4, it is an important provision for suppressing/reducing the rolling resistance during running to arrange the reinforcing layer 4 at a position where the reinforcing layer 4 is effective in suppressing strain stress, while minimizing the range where the reinforcing layer 4 is arranged on the carcass ply 2 and thereby reducing the "volume" so as to minimize the disadvantage attributed to a "material having a large hysteresis loss under strain".

However, according to the studies conducted by the present inventors, with the use of a conventional cord material in which cord ends are not adhered rather than the cord material of the present invention in which cord cut ends are fused together, it is difficult to arrange the reinforcing layer 4 at a position where the tire durability under high-speed running can be satisfied and the rolling resistance during running can be improved at the same time.

The reason for this is because, when the tire radial-direction inner end 4b is arranged in the buttress portion that is pushed up during high-speed running, not only the buttress portion is pushed up and deformed but also a stress acts to separate the non-adhered cord cut ends, as a result of which cracks are generated from the cord end surface and the durability is thereby reduced.

Accordingly, when it is aimed at ensuring high-speed durability using conventional cords whose ends are not adhered, with regard to the arrangement range of the reinforcing layer 4, the tire radial-direction inner end 4b is positioned on the tire radial-direction inner side than the tire maximum width position P as in those cases described in the related art documents so as to prevent a failure from occurring due to lifting of the buttress portion during high-speed running that is caused by arranging the cord ends therein. However, from the standpoint of strain energy loss, the rolling resistance is exacerbated since intersecting layers of a "material having a large hysteresis loss under strain" are arranged over a wide range. Accordingly, in conventional cord materials, in order to maintain the tire durability under high-speed running and the like, it is necessary to extend the terminal portions of a reinforcing layer to those spots having minor tire deformation such that a crack does not propagate on the end surface; however, since the reinforcing layer is extended to a range where it is not effective in suppressing the strain stress, the rolling resistance is consequently exacerbated. It is difficult to attain both satisfactory durability and satisfactory rolling resistance under high-speed running unless the arrangement range of the reinforcing layer can be minimized to a range where the reinforcing layer is effective for suppression of strain stress by, as in the present invention, using a cord material in which cord cut ends are fused and arranging the cord ends within a range where the tire deformation is large or in the immediate vicinity thereof.

Meanwhile, the tire radial-direction outer end 4a of the reinforcing layer 4 is preferably sandwiched between the carcass ply 2 and the belt 3A arranged on the tire inner side in the belt layer 3. The reason for this is because, although the "hysteresis loss (b) of the material due to strain" is increased as the number of intersecting points increases due to the sandwiching of the reinforcing layer 4, since the belt layer 3 sandwiching the reinforcing layer 4 is made of steel in this case, deformation thereof is smaller than that of an organic fiber cord and the "strain stress (a)" caused by strain deformation is thus small, so that the rolling resistance is not exacerbated. Rather, when the tire radial-direction outer end 4a is conversely not sandwiched, since such a state as described below in the paragraph [0040] (Lb ≤ 0) is created and the tire radial-direction outer end 4a of the reinforcing layer 4 has a large difference in rigidity between rubbers, the deflection caused by strain deformation is large between the tire radial-direction outer end 4a of the reinforcing layer 4 and the rubbers, as a result of which the rolling resistance is exacerbated.

Therefore, by sandwiching the tire radial-direction outer end 4a of the reinforcing layer 4 between the belt 3A and the carcass ply 2, since the reinforcing layer 4 conforms to the steel cord and the strain deformation is thereby reduced, the rolling resistance is improved, which is preferred.

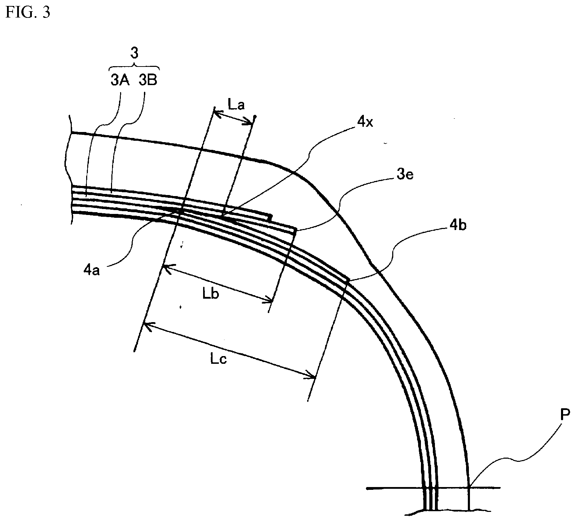

FIG. 3 is an enlarged widthwise partial cross-sectional view illustrating a reinforcing layer arrangement site of the pneumatic tire illustrated in FIG. 1. As illustrated in FIG. 1, a length along the reinforcing layer 4 from the tire radial-direction outer end 4a of the reinforcing layer 4 to a tire width-direction outermost point 4x of a region where the reinforcing layer 4 is sandwiched between the belt layer 3 and the carcass ply 2 is defined as "La" (mm); a length along the reinforcing layer 4 from the tire radial-direction outer end 4a of the reinforcing layer 4 to a tire width-direction end 3e of the belt layer 3 is defined as "Lb" (mm); a length along the reinforcing layer 4 from the tire radial-direction outer end 4a of the reinforcing layer 4 to the tire radial-direction inner end 4b of the reinforcing layer 4 is defined as "Lc" (mm); and a belt width along the belt 3A that is the innermost belt of the belt layer 3 and adjacent to the carcass ply 2 is defined as "Bw" (mm).

When the tire radial-direction outer end 4a of the reinforcing layer 4 is arranged on the tire width-direction outer side than the tire width-direction end 3e of the belt layer 3 (Lb ≤ 0), the tire width-direction end 3e of the belt layer 3 and the tire radial-direction outer end 4a of the reinforcing layer 4 are apart from each other, and a carcass-ply-2-only section is thus generated. Since this carcass-ply-2-only section is a stepped part having a low carcass ply rigidity, a stress is concentrated in the carcass-ply-2-only section due to its insufficient rigidity at the time of compression and deflection of the carcass ply 2 during rolling of the tire, as a result of which not only the durability is reduced but also the compression causes bending deflection in a buckling direction and the loss of strain energy due to this deflection is increased, which is not preferred. Therefore, the Lb is preferably larger than 0 (Lb > 0).

In the region where the reinforcing layer 4 is sandwiched between the belt layer 3 and the carcass ply 2, the tire radial-direction inner end 4b of the reinforcing layer 4 can be arranged at any position as long as it is on the tire radial-direction inner side than the tire width-direction outermost point 4x but on the tire radial-direction outer side than the tire maximum width position P; however, the tire radial-direction inner end 4b is arranged on the outer side than the tire width-direction end 3e of the belt layer 3 in a range of preferably (Lc - Lb) ≤ 50 mm, more preferably (Lc - Lb) ≤ 30 mm, particularly preferably (Lc - Lb) ≤ 20 mm.

The reasons for this preferred range are as follows. That is, there is a difference in tire rigidity between the belt-reinforced part and the carcass ply and, in order to compensate the rigidity difference of such a part, an effect of compensating the rigidity difference between the belt-reinforced part and the carcass ply with the reinforcing layer 4 can be obtained as long as the tire radial-direction inner end 4b of the reinforcing layer 4 is arranged on the outer side than the point 4x. Meanwhile, when the length Lc of the reinforcing layer 4 to the tire radial-direction inner end 4b is longer than the length Lb of the belt layer 3 to the tire width-direction end 3e by more than 50 mm, since the range where the reinforcing layer 4 is arranged on the carcass ply 2 is excessively wide and the number of intersecting points is thus large, the rolling resistance is increased due to hysteresis loss of the rubber between intersecting cords in association with deformation of the side walls during rolling of the tire under load, which is not preferred. Further, when the difference between the length Lc of the reinforcing layer 4 to the tire radial-direction inner end 4b and the length Lb of the belt layer 3 to the tire width-direction end 3e is 30 mm or smaller, since the number of cord intersections is small and the carcass ply 2 and the reinforcing layer 4 do not intersect at those spots where the side wall portion is largely deformed during rolling of the tire, exacerbation of the rolling resistance is limited, which is preferred.

Moreover, when the reinforcing layer 4 is arranged such that the difference between the length Lc of the reinforcing layer 4 to the tire radial-direction inner end 4b and the length Lb of the belt layer 3 to the tire width-direction end 3e is less than 20 mm, for example, the in-plane rigidity of the intersecting belt layers is increased due to contribution from an effect of improving the in-plane rigidity of a belt extending along the belt intersecting layers in the vicinity of the belt; therefore, an effect of increasing the lateral rigidity or torsional rigidity of the tread portion during cornering and thereby improving the driving stability of the tire is obtained, which is particularly preferred.

In the present invention, there is no particular problem even if the "tire width-direction outermost point 4x of a region where the reinforcing layer 4 is sandwiched between the belt layer 3 and the carcass ply 2" is absent and "the tire radial-direction outer end 4a of the reinforcing layer 4 is positioned between the belt layer 3 and the carcass ply 2". The reason for this is because, since the tire radial-direction outer end 4a of the reinforcing layer 4 according to the present invention is fused even in the tire rolling at a high speed as described below, a crack generated from this end does not cause a tire failure.

However, in order to suppress deflection of the ply cord direction toward the tread portion that is caused by application of a load to the tire, it is preferred that the "tire width-direction outermost point 4x of a region where the reinforcing layer 4 is sandwiched between the belt layer 3 and the carcass ply 2" be present and that the rigidity of the carcass ply side up to a point where the belt and the ply cords are in contact be reinforced with the reinforcing layer 4 (La > 0), and it is more preferred that the La be greater than 5 mm (La > 5 mm) for allowing the reinforcing layer 4 to be sufficiently sandwiched even when the arrangement dimensions in the tire production are variable.

The upper limit value of the La can be arbitrarily set in accordance with the belt structure and the like of the tire to be applied; however, it is preferably less than 1/3 of the belt width Bw of the innermost belt 3A that is arranged immediately above the carcass ply 2. The reason for this is because, when the La is overly long, the rolling resistance may be exacerbated due to a large volume of the reinforcing layer 4 and an excessively large number of points at which the belt intersects with the cords of the reinforcing layer 4. The La is more preferably less than 1/4 of the belt width Bw of the innermost belt 3A since this enables to arrange the reinforcing layer 4 in a range where the belt end portion is largely deformed by a centrifugal force and the like during running while further reducing the number of cord intersecting points and, therefore, the reinforcing layer 4 can be arranged at a position that is more effective for reduction of strain stress in the belt end region, and the rolling resistance during running is likely to be suppressed or reduced. The La is particularly preferably less than 1/6 of the belt width Bw of the innermost belt 3A and, in this case, since the reinforcing layer 4 is arranged in a region near the belt end that is most largely deformed during running in particular, the reinforcing layer 4 is arranged at a position that is further effective for reduction of strain stress, and the rolling resistance during running is more likely to be reduced.

The upper limit of the Lc may be in a range defined by the above-described (Lc - Lb) and Lb, and the lower limit is preferably not less than 10 mm (Lc ≥ 10 mm). The reason for this is because, since the cord length is excessively short and the cords thus have a low rigidity an Lc value of less than 10 mm, an improvement effect by reinforcement of the carcass ply is hardly obtained even when the reinforcing layer is applied.

With regard to the structure of the cords of the reinforcing layer 4, cord structures in which twisted cords are used have been conventionally examined; however, in the studies conducted by the present inventors, it was found that the cords are preferably monofilament cords. The reason for this because, since monofilament cords have characteristics of a material that is less likely to be deflected in various cord-buckling directions due to input made by compression as compared to a cord having a twisted structure, when a compressive strain is input to the carcass ply 2 in its cord direction, the use of such monofilament cords as the cords of the reinforcing layer 4 suppresses deflection of the carcass ply 2 in an out-of-plane buckling direction or deflection caused by in-plane deformation of the carcass ply 2 that is associated with an increase in the cord gaps of the carcass ply 2 curved in the shoulder portion 14; therefore, deflecting deformation of the ply along the cord compression direction in the vicinity of the ground contact surface, which is caused by rolling of the tire, can be reduced, whereby a tire that has an improved uniformity and rolls smoothly with hardly any variations in vibration can be obtained.

Moreover, by using a cord structure having a high effect of suppressing deflection caused by compression in the cord direction at the above-described spot of the tire, the loss due to strain deformation such as deflection caused by repeated deformation during rolling is reduced, so that the effect of improving the rolling resistance can be further improved.

Meanwhile, a force acts in the direction of pulling out the organic fiber cords of the reinforcing layer 4 at the time when the tread surface in contact with the ground kicks out the ground during running; therefore, in order to improve the tire durability that is likely to be reduced during high-speed and high-strain rolling due to generation of a crack originating at a cut end of conventional cords surface-treated with an adhesive composition, the cords used in the reinforcing layer 4 are preferably a cord material containing a material that makes a cord cut end and a rubber unlikely to be detached.

In the present invention, in order to improve the rolling resistance and to suppress displacement of the carcass cord layer caused by rolling of the tire under load, the end portions of the reinforcing layer 4 are positioned where repeated strain is large; therefore, a cord containing a material that makes a cord cut end and a rubber even more unlikely to be detached is required. Further, by allowing the end portions and the rubber end surface to be fused together, cracking between the rubber and the cord end surface under strain deformation is eliminated, so that the strain energy loss, which is caused by dissipation of a strain stress due to displacement of cracks under a strain of tire deformation and conversion of the strain stress into vibrations and heat, can be reduced.

Moreover, detachment can be suppressed by arranging the end portions of the reinforcing layer away from a spot having a large strain; however, in such a section where the end portions of the reinforcing layer are arranged away from a spot having a large strain, the number of unnecessary intersections between the reinforcing layer and the carcass is increased. Accordingly, by using a cord material containing a material that makes a cord cut end and a rubber unlikely to be detached, it is made possible to adopt an arrangement that can efficiently improve the rolling resistance.

In this manner, a cord material containing a material that makes a cord cut end and a rubber unlikely to be detached is preferred; therefore, in the present invention, as the cords of the reinforcing layer 4, core-sheath type composite fibers (C) whose core portion is composed of a high-melting-point resin (A) having a melting point of 150°C or higher and sheath portion is composed of a resin material (B) containing an olefin-based polymer (D) having a melting point of not higher than a tire vulcanization temperature are used.

The resin material (B) is required to be fluid at a "tire vulcanization temperature" and, for example, at 160°C that is an industrial tire vulcanization temperature, the melt viscosity of the resin material (B) is preferably 500 to 500,000 mPa·s, more preferably 50,000 mPa·s or less, particularly preferably 1,000 mPa·s or less. The melt viscosity can be measured in accordance with "Testing Methods for Melt Viscosity of Hot-melt Adhesives" prescribed by JIS 6862.

When the melt viscosity of the resin material (B) is higher than 500,000 mPa·s, the coatability of the cord ends or the heat fusibility of the cords with a rubber at 160°C is deteriorated during vulcanization, which is not preferred. When the melt viscosity is higher than 50,000 mPa·s, the melt viscosity may be reduced and the fusibility in vulcanization may be deteriorated in a low-vulcanization-temperature range of 145°C. A melt viscosity of 1,000 mPa·s or less is preferred since this leads to favorable fusibility at low temperatures. However, a melt viscosity of less than 500 mPa·s is not preferred since the resin material (B) has a low cohesive failure resistance as a resin layer, and the resin layer is thus likely to be broken under stress.

The "tire vulcanization temperature" is not particularly restricted; however, it generally means 160°C or lower, which is an industrial tire vulcanization temperature. A heavy tire is vulcanized at about 145°C for a prolonged period so as to prevent the tire from being left unvulcanized with only the tire surface being over-vulcanized; therefore, the tire vulcanization temperature is more preferably 145°C or lower.

In the core-sheath type composite fibers (C) used in the present invention, the core portion is composed of a high-melting-point resin (A) having a melting point of 150°C or higher, and the sheath portion is composed of a resin material (B) containing an olefin-based polymer (D) having a melting point of not higher than the tire vulcanization temperature. In the core-sheath type composite fibers (C), since the resin material (B) constituting the sheath portion contains the olefin-based polymer (D) having a melting point of not higher than a temperature used in tire vulcanization, there is an advantage that the core-sheath type composite fibers (C), when applied for reinforcement of a rubber article, can directly adhered with a rubber through thermal fusion by the heat applied during vulcanization. In other words, the core-sheath fibers of the present invention are embedded in a rubber; however, since integration of the core-sheath fibers with the rubber does not require a dipping treatment in which a thermosetting adhesive composition (e.g., a resorcin-formalin-latex (RFL) adhesive) conventionally used for bonding tire cords is adhered, the bonding step can be simplified. Further, in the application for reinforcement of a tire or the like, when an organic fiber is adhered with a rubber using an adhesive composition, it is generally required to coat the organic fiber with a fiber coating rubber (skim rubber) in order to secure an adhesive strength; however, according to the core-sheath fibers of the present invention, a high adhesive strength between the core-sheath fibers and a tread rubber can be directly attained through thermal fusion without requiring a fiber coating rubber.

Further, according to the studies conducted by the present inventors, it was found that, when the core-sheath fibers of the present invention are vulcanized, at a cut end of the resultant, the cut end surface of the core portion that was exposed prior to the vulcanization is covered by the resin of the sheath portion, and the resin of the sheath portion and a rubber can be strongly fused together in this part as well. The reason for this is believed to be because a low-melting-point resin material constituting the sheath portion is made to flow by the heat applied during the vulcanization and infiltrates into gaps between the cut end surface of the core portion constituted by a high-melting-point resin and the rubber. Consequently, the durability against a strain after the vulcanization can be further improved.

In the core-sheath type composite fibers of the present invention, the melting point of the high-melting-point resin (A) constituting the core portion is 150°C or higher, preferably 160°C or higher. When the melting point of the high-melting-point resin (A) is lower than 150°C, for example, the core portions of the composite fibers are melt-deformed and reduced in thickness and/or the orientation of the fiber resin molecules is deteriorated during vulcanization of a rubber article; therefore, sufficient reinforcing performance is not attained. Further, in the core-sheath type composite fibers of the present invention, the lower limit of the melting point of the olefin-based polymer (D) constituting the sheath portion is in a range of preferably 80°C or higher, more preferably 120°C or higher, still more preferably 135°C or higher. When the melting point of the olefin-based polymer (D) is lower than 80°C, a sufficient adhesive strength may not be obtained due to, for example, formation of fine voids on the surface if the rubber is fluidized and thus does not adequately adhere to the surface of the resin material (B) in the early stage of vulcanization. The melting point of the olefin-based polymer (D) is preferably 120°C or higher since this enables to simultaneously perform thermal fusion of the rubber and the low-melting-point resin material and a vulcanization cross-linking reaction of the resulting rubber composition at a vulcanization temperature of 130°C or higher that can be used industrially for rubber compositions in which sulfur and a vulcanization accelerator are incorporated. In cases where the vulcanization temperature is set at 170°C or higher in order to industrially shorten the vulcanization time, with the melting point of the olefin-based polymer (D) being lower than 80°C, since the viscosity of the molten resin is excessively low and the thermal fluidity is thus high during vulcanization, a pressure applied during vulcanization may cause generation of a thin part in the sheath portion, and a strain stress applied in an adhesion test or the like may be concentrated in such a thin part of the resin of the sheath portion to make this part more likely to be broken; therefore, the melting point of the olefin-based polymer (D) is more preferably 120°C or higher. Meanwhile, when the upper limit of the melting point of the olefin-based polymer (D) is lower than 150°C, because of the thermal fluidity of the resin material, compatibility with a rubber composition in the early stage of vulcanization may be attained at a high vulcanization temperature of 175°C or higher. Further, when the melting point of the olefin-based polymer (D) is 145°C or lower, resin compatibility in the early stage of vulcanization can be attained at a common vulcanization temperature, which is preferred.

The composite fibers used for rubber reinforcement in the present invention are characterized by being the composite fibers (C) having a core-sheath structure in which the sheath portion is constituted by the resin material (B) containing the olefin-based polymer (D) having a low melting point and can be directly adhered with a rubber through thermal fusion and, at the same time, the core portion is constituted by the high-melting-point resin (A) having a melting point of 150°C or higher. When the composite fibers are, for example, single-component monofilament cords, the effects of the present invention cannot be attained. In the case of a conventional single-component monofilament cord that is made of a polyolefin-based resin or the like and has a low melting point, the monofilament cord forms a melt through thermal fusion with the rubber of a rubber article and can thereby be wet-spread and adhered to the adherend rubber; however, once the monofilament cord is melted and the molecular chains of the fiber resin that are oriented in the cord direction become unoriented, the tensile rigidity that is required as a rubber-reinforcing cord material can no longer be maintained. Meanwhile, when the monofilament cord has such a high melting point that does not cause its resin to form a melt even under heating, the melt fusibility with a rubber is deteriorated. Therefore, in a single-component monofilament cord that is not a composite fiber having the core-sheath structure of the present invention, it is difficult to achieve both conflicting functions of maintaining the tensile rigidity and maintaining the melt fusibility with a rubber.

In the composite fibers (C) according to the present invention, the high-melting-point resin (A) having a melting point of 150°C or higher that constitutes the core portion is not particularly restricted as long as it is a known resin that is capable of forming a filament when melt spun, and the high-melting-point resin (A) can be a resin that contains a polymer selected from a polyolefin-based resin (P) and a polyester resin (Q), which have a melting point of 150°C or higher. Specific examples thereof include polyester resins (Q), such as polypropylene (PP), polyethylene terephthalate (PET), polybutylene terephthalate (PBT), polyethylene naphthalate (PEN) and polytrimethylene terephthalate (PTT); and polyamide resins (R), such as nylon 6, nylon 66 and nylon 12, and the high-melting-point resin (A) is preferably a polyester resin, a polyolefin resin, or the like. The polyester resin is particularly preferably, for example, a polytrimethylene terephthalate (PTT) resin.

In the present invention, the polytrimethylene terephthalate resin constituting the core portion may be a polytrimethylene terephthalate homopolymer or copolymer, or a mixture thereof with other mixable resin. Examples of a copolymerizable monomer of the polytrimethylene terephthalate copolymer include acid components, such as isophthalic acid, succinic acid, and adipic acid; glycol components, such as 1,4-butanediol and 1,6-hexanediol; polytetramethylene glycols; and polyoxymethylene glycols. The content of these copolymerizable monomers is not particularly restricted; however, it is preferably 10% by mass or less since these monomers reduce the flexural rigidity of the copolymer. Examples of a polyester resin that can be mixed with a polytrimethylene terephthalate-based polymer include polyethylene terephthalates and polybutylene terephthalates, and the polyester resin may be mixed in an amount of 50% by mass or less.

The intrinsic viscosity [$\eta$] of the above-described polytrimethylene terephthalate is preferably 0.3 to 1.2, more preferably 0.6 to 1.1. When the intrinsic viscosity is lower than 0.3, the strength and the elongation of the resulting fibers are reduced, whereas an intrinsic viscosity of higher than 1.2 makes the production difficult due to the occurrence of fiber breakage caused by spinning. The intrinsic viscosity [$\eta$] can be measured in a 35°C o-chlorophenol solution using an Ostwald viscometer. Further, the melting peak temperature of the polytrimethylene terephthalate, which is determined by DSC in accordance with JIS K7121, is preferably 180°C to 240°C, more preferably 200°C to 235°C. When the melting peak temperature is in a range of 180 to 240°C, high weather resistance is attained, and the bending elastic modulus of the resulting composite fiber can be increased.

As additives in a mixture containing the above-described polyester resin, for example, a plasticizer, a softening agent, an antistatic agent, a bulking agent, a matting agent, a heat stabilizer, a light stabilizer, a flame retardant, an antibacterial agent, a lubricant, an antioxidant, an ultraviolet absorber, and/or a crystal nucleating agent can be added within a range that does not impair the effects of the present invention.

In addition, in order to improve the compatibility of the core portion and the sheath portion at their interface, an ionomer in which an olefin-based copolymer containing a monomer of an unsaturated carboxylic acid or an anhydride thereof has a degree of neutralization with a metal salt of 20% or higher can be mixed in a range of 1 to 20 parts by mass.

The polyolefin-based resin (P) which constitutes the core portion and has a melting point of 150°C or higher is, for example, preferably a high-melting-point polyolefin resin, particularly preferably a polypropylene resin, more preferably a crystalline homopolypropylene polymer, still more preferably an isotactic polypropylene.

In the core-sheath type composite fibers used in the present invention, the core portion is constituted by a high-melting-point resin having a melting point of 150°C or higher, and this core portion does not melt even in a rubber vulcanization process. When the present inventors performed 15-minute vulcanization at 195°C, which is higher than the temperature used in ordinary industrial vulcanization conditions, and observed the cross-section of a cord embedded in the thus vulcanized rubber, it was found that, although the low-melting-point olefin-based polymer of the sheath portion was melted and its originally circular cross-section was deformed, the high-melting-point resin of the core portion maintained the circular cross-sectional shape of the core portion after core-sheath composite spinning and was not melted completely into a melt, and a fiber breaking strength of not less than 150 N/mm$^2$ was maintained as well.

In this manner, the present inventors discovered that, as long as the melting point of the resin constituting the core portion of a cord is 150°C or higher, the core-sheath fibers are not melted or broken even when the cord is subjected to a 195°C heating treatment during vulcanization of a rubber article, and the expected effects of the present invention can thus be attained. The reason why the cord exhibited such heat resistance that allows the cord to maintain its material strength even at a processing temperature higher than the intrinsic melting point of the resin as described above is believed to be because the melting point was increased to be higher than the intrinsic melting point of the resin since the cord was embedded in the rubber and, therefore, when the cord was vulcanized at a fixed length, a condition of fixed-length restriction where fiber shrinkage does not occur, which is different from a method of measuring the melting point without restricting the resin shape as in JIS K7121 and the like, was created. It is known that, as a thermal phenomenon in a situation unique to fiber materials, the melting point is sometimes increased under such a measurement condition of "fixed-length restriction" where fiber shrinkage does not occur (Handbook of Fibers 2nd Edition, March 25, 1994; edited by The Society of Fiber Science and Technology, Japan; published by Maruzen Co., Ltd.; page 207, line 13). With regard to this phenomenon, it is considered as follows. That is, the melting point of a substance is represented by a formula "Tm = ΔHm/ΔSm" and, in this formula, the crystallization degree and the equilibrium melting enthalpy (ΔHm) do not change for the same fiber resin. However, it has been considered that, when a tension is applied in the cord direction at a fixed length (or the cord is thus stretched) and thermal shrinkage of the cord during melting is inhibited, since melting hardly induces orientational relaxation of the molecular chains oriented along the cord direction, the melting enthalpy (ΔSm) is reduced and the melting point is increased as a result. With regard to such a resin material of the present invention, however, until the studies conducted by the present inventors, there has not been known any finding that is obtained by examining a cord material presumed to form a melt at a resin melting point or higher in accordance with a JIS method at a temperature corresponding to a rubber vulcanization process and studying a resin material suitable for reinforcement of a rubber article, which resin material can be directly adhered to a rubber through thermal fusion and provide satisfactory resin rigidity of the core portion even under heating in a vulcanization process.

As a preferred example of the present invention, when a polypropylene resin or a PTT resin is used as the resin having a melting point of 150°C or higher that constitutes the core portion, although the resulting cord has a lower modulus than known high-elasticity cords of 66 nylon, polyethylene terephthalate, aramid or the like that are conventionally used as tire cords, the production conditions such as the cord material and the stretching ratio in spinning can be adjusted such that the resulting cord has an intermediate elastic modulus between that of a conventional cord and that of a rubber; therefore, the cord can be arranged at a position inside a tire where a conventional tire cord could not be arranged, which is one characteristic feature of the present invention.

For example, the production of a rubber article such as a tire includes a vulcanization process in which members composed of a rubber or a coated cord material are assembled and a molded pre-vulcanization original form such as a green tire is placed in a mold and subsequently pressed against the mold from inside by high-temperature and high-pressure steam using a rubber balloon-shaped compression equipment called "bladder". In this process, when the modulus of the cord is excessively high, the cord material sometimes does not extend and expand along with the rubber material in the course of transition from the state of being arranged in the molded pre-vulcanization original form such as a green tire to the state of being pressed against the mold by high-temperature and high-pressure steam and, in such a case, the cord serves as a so-called "cutting thread" (a thread that cuts a lump of clay or the like) to cause a defect such as cutting and separation of the rubber material assembled in the unvulcanized original form. Therefore, without implementing a countermeasure in the production, it is difficult to arrange a high-modulus cord in a tire by a conventional production method. Particularly, in a structure in which a cord is arranged along the tire circumferential direction in a tire side portion, a problem in the production that the cord, which is pressed by high-temperature and high-pressure steam and thereby bears a tension, moves in the tire radial direction while cutting the rubber material on the bead side is likely to occur.

On the other hand, in the cord according to the present invention, since the cord material is also stretchier than a conventional high-elasticity cord, the production of a rubber article such as a tire can be carried out by a conventional method even when the rubber article has such a product structure or an arrangement in which a cord would serve as a "cutting thread" during the production and processing and thus could not be arranged. Such an increase in the freedom of the design relating to tire member arrangement is also a characteristic feature of the present invention.

Further, for example, when such cords are used as a reinforcing layer to be arranged adjacent to a cord cut-end portion of a carcass ply as in the present invention, a defect of accelerated cord deterioration occurs due to deformation, such as bending of the cord cut ends of the carcass ply, and repeated input of stress to the deformed site caused by bending and the like during tire running, unless, in the vulcanization process in which the cords are pressed against a mold from inside by high-temperature and high-pressure steam using the above-described bladder, the carcass ply is pressed against the mold with a pressure and the cords of the reinforcing layer are expanded. Accordingly, from this standpoint, it is desired that the expandability of the reinforcing layer be greater than that of the carcass ply under a pressure stress, and the cords are desired to have rigidity or creep properties under load at high temperatures as defined in the present invention.

The olefin-based polymer (D) used in the resin material constituting the sheath portion is preferably a polymer composed of an olefin(s), such as a propylene-α-olefin copolymer (H), a propylene-nonconjugated diene copolymer (I), an ionomer (J) in which an olefin-based copolymer containing a monomer of an unsaturated carboxylic acid or an anhydride thereof has a degree of neutralization with a metal salt of 20% or higher, and/or an olefin-based homopolymer (K).

In the propylene-α-olefin copolymer (H) according to the present invention, any known α-olefin monomer can be used as a comonomer copolymerized with propylene. Monomers that can be used as the comonomer are not restricted to a single kind, and preferred comonomers also include multi-component copolymers in which two or more kinds of monomers are used as in terpolymers. Further, other monomer(s) copolymerizable with polypropylene may be incorporated in a range of, for example, 5% by mole or less, as long as the intended effects of the present invention can be attained.

Preferred examples of such propylene-α-olefin copolymer (H) include propylene-ethylene random copolymers, propylene-ethylene-butene random copolymers, and butene-propylene random copolymers.

Examples of the α-olefin include those having 2 or 4 to 20 carbon atoms, specifically, linear or branched

$\alpha$-olefins, such as ethylene, propylene, 1-butene, 1-pentene, 1-hexene, 1-octene, 1-heptene, 4-methyl-pentene-1, 4-methyl-hexene-1, and 4,4-dimethylpentene-1; and cyclic olefins, such as cyclopentene, cyclohexene, and cycloheptene. These $\alpha$-olefins may be used individually, or in combination of two or more thereof.

Thereamong, ethylene, 1-butene, 4-methyl-1-pentene, 1-hexene and 1-octene are preferred, and ethylene and 1-butene are particularly preferred.

The propylene content in the above-described propylene-$\alpha$-olefin random copolymer is preferably 20 to 99.7% by mole, more preferably 75 to 99.5% by mole, still more preferably 95 to 99.3% by mole. A propylene content of less than 20% by mole may lead to insufficient impact resistance strength due to, for example, generation of a polyethylene crystal component. Meanwhile, a propylene content of 75% by mole or higher is generally preferred since good spinnability is attained. Further, when the propylene content is 99.7% by mole or less, addition polymerization of other monomer such as ethylene that copolymerizes with polypropylene leads to an increased molecular chain randomness, so that a cord that is easily thermally fusible is obtained. Moreover, the ethylene content is preferably 0.3% by mole to 80% by mole. When the ethylene content is higher than 80% by mole, the sheath portion does not have sufficient fracture resistance in the fusion thereof with an adherend rubber, and a crack is thus generated in the sheath portion, making fracture more likely to occur, which is not preferred. Meanwhile, when the ethylene content is 5% by mole or less, the fusibility of the sheath resins coming into contact with each other is reduced at the time of spinning, so that preferred spinnability is attained. Further, when the ethylene content is less than 0.3% by mole, since disturbance of the molecular chain orientation caused by addition polymerization of the ethylene monomer with a polymer composed of polypropylene is reduced and the crystallinity is consequently increased, the thermal fusibility of the resins of the sheath portion is deteriorated.

The propylene-$\alpha$-olefin copolymer (H) is preferably a random copolymer in which the block content, which is determined by NMR measurement of a repeating unit of the same vinyl compound moiety, is 20% or less of all aromatic vinyl compound moieties. The reason why such a random copolymer is preferred is because, when the propylene-$\alpha$-olefin copolymer (H) has a low crystallinity and is less oriented, fusibility attributed to the compatibility of its molecular chain with an adhered rubber component having low orientation is likely to be obtained at the time of heating.

The propylene-nonconjugated diene copolymer (I) according to the present invention can be obtained by polymerizing propylene with a known nonconjugated diene. Monomers that can be used as a comonomer are not restricted to a single kind, and preferred comonomers also include multi-component copolymers in which two or more kinds of monomers are used as in terpolymers. Further, other monomer(s) copolymerizable with polypropylene may be incorporated in a range of, for example, 5% by mole or less as long as the intended effects of the present invention can be attained, and the propylene-nonconjugated diene copolymer (I) also encompasses polymers containing such monomers. Preferred examples thereof include 1-butene-propylene copolymers.

Examples of a nonconjugated diene monomer include 5-ethylidene-2-norbornene, dicyclopentadiene, 1,4-hexadiene, cyclooctadiene, 5-vinyl-2-norbornene, 4,8-dimethyl-1,4,8-decatriene, and 4-ethylidene-8-methyl-1,7-nonadiene. Particularly, it is preferred to introduce a nonconjugated diene to ethylene and propylene as a third component since a component that is adhesive at the interface with an adherend rubber and has co-vulcanizability with sulfur is incorporated by the introduction of a component of an ethylene-propylene-diene copolymer (EPDM). For example, in the propylene-nonconjugated diene copolymer (I), an ethylene-propylene-diene copolymer containing 5-ethylidene-2-norbornene can be preferably used as a diene component.

The propylene content in the propylene-nonconjugated diene copolymer (I) is preferably 20 to 99.7% by mole, more preferably 30 to 75% by mole, still more preferably 40 to 60% by mole. When the propylene content is less than 20% by mole, a blocking phenomenon that the resins of the sheath portion of the cord adhere with each other is likely to occur after spinning. Further, when the propylene content is 30% by mole or less, friction on the surface during spinning is likely to cause disturbance of the sheath resin surface. Meanwhile, when the propylene content is higher than 99.7% by mole and the content of other monomer(s) copolymerized with the polypropylene is thus small, since the molecular chain randomness is reduced and the crystallinity of the polypropylene is increased, the resulting cord has low fusibility. Further, a nonconjugated diene monomer content of higher than 80% by mole is not preferred since this makes the fracture resistance of the sheath portion insufficient in the fusion of the sheath portion with an adherend rubber, and a crack is thus generated in the sheath portion, making fracture more likely to occur. Moreover, when the ethylene content is less than 0.3% by mole, the compatibility with an adherend rubber and the improvement in adhesion that is attributed to co-vulcanization are reduced.

As the ionomer (J) according to the present invention in which an olefin-based copolymer containing a monomer of an unsaturated carboxylic acid or an anhydride thereof has a degree of neutralization with a metal salt of 20% or higher, an ionomer obtained by neutralizing, with a metal, some or all of the carboxyl groups of, for example, an ethylene-ethylenically unsaturated carboxylic acid copolymer or a modification product of a polyolefin with an unsaturated carboxylic acid can be used. Examples of the metal species constituting such an ionomer include monovalent metals, such as lithium, sodium and potassium; and polyvalent metals, such as magnesium, calcium, zinc, copper, cobalt, manganese, lead and iron, and these metal species can be used individually, or in combination of two or more thereof. Thereamong, the metal species is preferably sodium, magnesium, calcium or zinc, particularly preferably sodium or zinc.

According to the studies conducted by the present inventors, for the use in the resin material (B) of the sheath portion, an ionomer obtained by neutralizing an ethylene-ethylenically unsaturated carboxylic acid copolymer with a metal salt at a degree of 20% or higher is preferred. The reason for this is because once the resin material of the sheath portion generates a proton $H^+$-donating acidic atmosphere due to its functional group such as a carboxylic acid group, even if sulfur migrates from an adherend rubber to the resin material of the sheath portion and is thereby activated, since a polyvulcanized product is reduced by protons $H^+$ and thus cannot be formed, an environment in which strong adhesion with the adherend rubber cannot be attained is likely to be created. The degree of neutralization of the carboxylic acid with the metal salt is preferably 100% or higher; however, since the carboxylic acid is a weak acid, the effects of the present invention can be attained even when the degree of neutralization of the carboxylic acid is 20%. The degree of neutralization of the carboxylic acid is preferably 20% to 250%, more preferably 70% to 150%.

Examples of an ethylenically unsaturated carboxylic acid monomer include vinyl esters, such as vinyl acetate and vinyl propionate; acrylic acid esters, such as methyl acrylate, ethyl acrylate, isopropyl acrylate, *n*-butyl acrylate, isobutyl acrylate, and isooctyl acrylate; methacrylic acid esters, such as methyl methacrylate and isobutyl methacrylate; and maleic acid esters, such as dimethyl maleate and diethyl maleate. Thereamong, methyl acrylate and methyl methacrylate are preferred. As the ionomer (J), for example, an ionomer of an ethylene-methacrylic acid copolymer can be preferably used.

In the present invention, the degree of neutralization is defined by the following formula:

$$\text{Degree of neutralization (\%)} = 100 \times [(\text{Number of moles of cation component in}$$

$$\text{resin component} \times \text{Valence of cation component}) + (\text{Number of moles of metal component in}$$

$$\text{basic inorganic metal compound} \times \text{Valence of metal component})]/(\text{Number of moles of}$$

$$\text{carboxyl group in resin component})$$

The amount of a cation component and that of an anion component can be determined by a method of examining the degree of neutralization of an ionomer, such as neutralization titration.

Examples of the olefin-based homopolymer (K) according to the present invention include ethylene homopolymers, such as high-density polyethylenes, low-density polyethylenes, and linear low-density polyethylenes; propylene homopolymers, such as isotactic polypropylenes, atactic polypropylenes, and syndiotactic polypropylenes; 4-methyl-pentene-1 homopolymers; 1-butene homopolymers; polybutadienes; polyisoprenes; and polynorbornenes. In the present invention, preferred examples of the olefin-based homopolymer (K) include, but not particularly limited to, high-density polyethylenes and polybutadienes.

Examples of a method of producing these olefin-based copolymer resins include slurry polymerization, vapor-phase polymerization and liquid-phase bulk polymerization, in which an olefin polymerization catalyst such as a Ziegler catalyst or a metallocene catalyst is used and, as a polymerization system, either a batch polymerization system or a continuous polymerization system may be employed.

In the present invention, as the olefin-based polymer (D) contained in the resin material (B) of the sheath portion, the propylene-$\alpha$-olefin copolymer (H), the propylene-nonconjugated diene copolymer (I), the ionomer (J) in which an olefin-based copolymer containing a monomer of an unsaturated carboxylic acid or an anhydride thereof has a degree of neutralization with a metal salt of 20% or higher, and the olefin-based homopolymer (K) can be used individually, or in combination of two or more thereof.

Further, in the resin material (B) of the sheath portion, at least one selected from a styrene-based elastomer (L) containing a monomolecular chain in which mainly styrene monomers are arranged in series, a vulcanization accelerator (M), a vulcanization accelerating aid (N) and a filler (O) can be incorporated along with the olefin-based polymer (D).

In the present invention, it is preferred that the resin material constituting the sheath portion further contain, as a compatibilizer, the styrene-based elastomer (L) containing a monomolecular chain in which mainly styrene monomers are arranged in series. By incorporating the styrene-based elastomer (L), the compatibility between the resin material (B) and a rubber is improved, so that their adhesion can be improved.

That is, a low-melting-point resin material is a composition containing, as a main component, a polyolefin resin such a homopolymer (e.g., a polyethylene or a polypropylene) or an ethylene-propylene random copolymer, which is a resin composition having the melting point range defined in the present invention, and it is generally known that a mixed resin composition thereof has a phase-separated structure. Therefore, by adding the styrene-based elastomer (L) as a block copolymer composed of a soft segment and a hard segment, compatibilization of the phases at their interface can be facilitated. The styrene-based elastomer (L) preferably contains a segment which shows adhesiveness at the interface between a high-melting-point resin that is a core component and a resin material that is a sheath component, and interacts with the molecular structure of a styrene-butadiene rubber (SBR), a butadiene rubber (BR), a butyl rubber (IIR), a polyisoprene structure-containing natural rubber (IR) or the like that is contained in the sheath component and adherend rubber, since such a styrene-based elastomer improves the adhesion with an adherend rubber. Particularly, when the adherend rubber contains a styrene-butadiene rubber (SBR), it is preferred to incorporate a styrene component-containing styrene-based block copolymer into the sheath component since this improves the compatibility of the sheath portion with the adherend rubber at their interface in fusion and the adhesive strength is thereby improved.

It is noted here that, in the present invention, the term "block copolymer" refers to a copolymer composed of two or more monomer units, in which mainly at least one of the monomer units is arranged in a long continuous series to form a monomolecular chain (block). Further, the term "styrene-based block copolymer" refers to a block copolymer that contains a block in which mainly styrene monomers are connected with each other and arranged in a long series.

As the styrene-based elastomer (L), specifically, a styrene-based block copolymer can be used, and one which contains styrene and a conjugated diolefin compound is preferred. More specific examples of the styrene-based elastomer (L) include styrene-butadiene-based polymers, polystyrene-poly(ethylene/propylene)-based block copolymers, styrene-isoprene-based block polymers, and completely or partially hydrogenated polymers that are obtained by hydrogenation of a double bond(s) of a block copolymer of styrene and butadiene. Further, the styrene-based elastomer may be modified with maleic acid.

Specific examples of the styrene-butadiene-based polymers include styrene-butadiene polymers (SBS), styrene-ethylene-butadiene copolymers (SEB), styrene-ethylene-butadiene-styrene copolymers (SEBS), styrene-butadiene-butylene-styrene copolymers (SBBS), partially hydrogenated styrene-isoprene-butadiene-styrene copolymers, and hydrogenation products of block copolymers having a styrene block on both terminals and a block composed of a random copolymer of styrene and butadiene in the main chain, such as S.O.E. #609 manufactured by Asahi Kasei Chemicals Corporation. Examples of the polystyrene-poly(ethylene/propylene)-based block copolymers include polystyrene-poly(ethylene/propylene) block copolymers (SEP), polystyrene-poly(ethylene/propylene) block-polystyrene (SEPS), polystyrene-poly(ethylene/butylene) block-polystyrene (SEBS), and polystyrene-poly(ethylene-ethylene/propylene) block-polystyrene (SEEPS). Examples of the styrene-isoprene-based block polymers include polystyrene-polyisoprene-polystyrene copolymers (SIS) and polystyrene-polyisobutylene-polystyrene block copolymers (SIBS). In the present invention, among these copolymers, a styrene-isoprene copolymer, a styrene-butadiene polymer, a styrene-butadiene-butylene-styrene copolymer, and a styrene-ethylene-butadiene-styrene copolymer can be suitably used from the standpoints of adhesion and compatibility with rubber. Further, in cases where the adherend rubber is a composition composed of a low-polarity rubber such as BR, SBR or NR, a styrene-based block copolymer or a hydrogenation product thereof is preferred since superior compatibility is attained when the copolymer has no high-polarity functional group introduced by modification or the like.

When modification is performed to further introduce a polar group into a hydrogenation product of a styrene-butadiene polymer, the modification can be performed by introducing an amino group, a carboxyl group or an acid anhydride group into the hydrogenation product. Such modification is not particularly restricted; however, in the present invention, the modification of introducing a polar group is preferably, for example, modification based on introduction of an unsaturated amino group using 3-lithio-1-[*N,N*-bis(trimethylsilyl)]aminopropane, 2-lithio-1-[*N,N*-bis(trimethylsilyl)]aminoethane, 3-lithio-2,2-dimethyl-1-[*N,N*-bis(trimethylsilyl)]aminopropane or the like.

The content of the styrene-based elastomer (L) may be 0.1 to 30 parts by mass, particularly 1 to 15 parts by mass, with respect to a total of 100 parts by mass of the resin components such as an olefin-based polymer contained in the resin material constituting the sheath portion. By controlling the content of the styrene-based elastomer (L) in the above-described range, an effect of improving the compatibility between the resin material and a rubber can be favorably attained.

The styrene-based elastomers (L) has no crystal structure for being an elastomer and consists of only amorphous moieties; therefore, there is no melting point at which the styrene-based elastomer (L) shows fluidity due to disturbance of a crystalline moiety by heating/warming of the polymer. Accordingly, an adhered rubber that is similarly amorphous can attain fluidity with heat even if, as in the case of the olefin-based polymer (D) exhibiting a common melting behavior, the polymer is not heated/warmed to its melting point or higher so as to disturb the crystalline moiety of a high-molecular-weight chain and thereby impart fluidity. Since such a styrene-based elastomer (L) used in the present invention is a component that improves the compatibility of a polymer with an adherend rubber, when the styrene-based elastomer (L) is incorporated into the resin material (B) and the olefin-based polymer (D) is fluidized by heat, the compatibility with the adherend rubber is improved, whereby the fusibility of the adherend rubber and the resin material (B) can be further improved.

In the present invention, the resin material constituting the sheath portion may further contain a vulcanization accelerator (M). By incorporating the vulcanization accelerator (M), interaction takes place at the rubber interface due to an effect of bringing the sulfur component contained in an adherend rubber into a transition state between the vulcanization accelerator and a polyvulcanized product, and the amount of sulfur migrating from the rubber to the surface of the resin of the sheath portion or into the resin is increased. Further, when a conjugated diene that can be vulcanized with sulfur is contained as a component of the resin of the sheath portion, co-reaction with the adherend rubber is facilitated, so that the adhesion of the resin material and the rubber can be further improved.

The vulcanization accelerator is, for example, a Lewis base compound, examples of which include basic silica; primary, secondary and tertiary amines; organic acid salts of these amines, as well as adducts and salts thereof; aldehyde ammonia-based accelerators; and aldehyde amine-based accelerators. Examples of other vulcanization accelerators include sulfenamide-based accelerators, guanidine-based accelerators, thiazole-based accelerators, thiuram-based accelerators and dithiocarbamic acid-based accelerators, which can activate sulfur by, for example, ring-opening a cyclic sulfur when a sulfur atom of the respective vulcanization accelerators comes close thereto in the system to convert the sulfur into a transition state and thereby generating an active vulcanization accelerator-polyvulcanized product complex.

The Lewis base compound is not particularly restricted as long as it is a compound that is a Lewis base in the definition of Lewis acid base and can donate an electron pair. Examples thereof include nitrogen-containing compounds having a lone electron pair on a nitrogen atom and, specifically, among those vulcanization accelerators known in the rubber industry, a basic compound can be used.

Specifically, the basic compound is, for example, an aliphatic primary, secondary or tertiary amine having 5 to 20 carbon atoms, examples of which include: acyclic monoamines, such as alkylamines (e.g., n-hexylamine, coconut amine, laurylamine, 1-aminooctadecane, oleylamine, and tallow amine), dialkylamines (e.g., dibutylamine, distearylamine, and di(2-ethylhexyl)amine) and trialkylamines (e.g., tributylamine, trioctylamine, dimethyl coconut amine, dimethyldecylamine, dimethyllaurylamine, dimethylmirystylamine, dimethylpalmitylamine, dimethylstearylamine, dimethylbehenylamine, and dilaurylmonomethylamine), as well as derivatives and salts thereof; acyclic polyamines, such as ethylene diamine, tallow propylene diamine, diethylene triamine, triethylene tetramine, tetraethylene pentamine, pentaethylene hexamine, hexamethylene diamine and polyethylene imine, as well as derivatives and salts thereof; alicyclic polyamines such as cyclohexylamine, as well as derivatives and salts thereof; alicyclic polyamines such as hexamethylene tetramine, as well as derivatives and salts thereof; aromatic monoamines, such as aniline, alkylaniline, diphenylaniline, 1-naphthylaniline and *N*-phenyl-1-naphthylamine, as well as derivatives and salts thereof; and aromatic polyamine compounds, such as phenylene diamine, diaminotoluene, *N*-alkylphenylene diamine, benzidine, guanidines and *n*-butylaldehyde aniline, as well as derivatives thereof. Examples of the guanidines include 1,3-diphenylguanidine, 1,3-di-*o*-tolylguanidine, 1-*o*-tolylbiguanide, di-*o*-tolylguanidine salt of dicatechol borate, 1,3-di-*o*-cumenylguanidine, 1,3-di-*o*-biphenylguanidine, and 1,3-di-*o*-cumenyl-2-propionyl guanidine. Thereamong, 1,3-diphenylguanidine is preferred because of its high reactivity.

Examples of an organic acid that forms a salt with the above-described amines include carboxylic acid, carbamic acid, 2-mercaptobenzothiazole, and dithiophosphoric acid. Examples of a substance that forms an adduct with the above-described amines include alcohols and oximes. Specific examples of an organic acid salt or adduct of the amines include n-butylamine acetate, dibutylamine oleate, hexamethylenediamine carbamate, and dicyclohexylamine salt of 2-mercaptobenzothiazole.

Examples of a nitrogen-containing heterocyclic compound that shows basicity by having a lone electron pair on a nitrogen atom include: monocyclic nitrogen-containing compounds, such as pyrazole, imidazole, pyrazoline, imidazoline, pyridine, pyrazine, pyrimidine and triazine, as well as derivatives thereof; and bicyclic nitrogen-containing compounds, such as benzimidazole, purine, quinoline, pteridin, acridine, quinoxaline and phthalazine, as well as derivatives thereof. Examples of a heterocyclic compound having a heteroatom other than a nitrogen atom include heterocyclic compounds containing nitrogen and other heteroatom, such as oxazoline and thiazoline, as well as derivatives thereof.

Specific examples of the above-described other vulcanization accelerators include known vulcanization accelerators, such as thioureas, thiazoles, sulfenamides, thiurams, dithiocarbamates, and xanthates.

Examples of the thioureas include *N,N'*-diphenyl thiourea, trimethyl thiourea, *N,N'*-diethyl thiourea, *N,N'*-dimethyl thiourea, *N,N'*-dibutyl thiourea, ethylene thiourea, *N,N'*-diisopropyl thiourea, *N,N'*-dicyclohexyl thiourea, 1,3-di(*o*-tolyl)thiourea, 1,3-di(p-tolyl)thiourea, 1,1-diphenyl-2- thiourea, 2,5-dithiobiurea, guanyl thiourea, 1-(1-naphthyl)-2-thiourea, 1-phenyl-2-thiourea, *p*-tolyl thiourea, and o-tolyl thiourea. Thereamong, *N,N'*-diethyl thiourea, trimethyl thiourea, *N,N'*-diphenyl thiourea, and *N,N'*-dimethyl thiourea are preferred because of their high reactivity.

Examples of the thiazoles include 2-mercaptobenzothiazole, di-2-benzothiazolyl disulfide, zinc salt of 2-mercaptobenzothiazole, cyclohexylamine salt of 2-mercaptobenzothiazole, 2-(*N,N*-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-*d*]thiazole, 2-mercapto-5-methoxybenzothiazole, and 6-amino-2-mercaptobenzothiazole. Thereamong, 2-mercaptobenzothiazole, di-2-benzothiazolyl disulfide, zinc salt of 2-mercaptobenzothiazole, cyclohexylamine salt of 2-mercaptobenzothiazole, and 2-(4'-morpholinodithio)benzothiazole are preferred because of their high reactivity. Further, for example, di-2-benzothiazolyl disulfide and zinc salt of 2-mercaptobenzothiazole are particularly preferred since they are highly soluble even when added to a relatively nonpolar polymer and are, therefore, unlikely to induce a reduction in spinnability and the like caused by deterioration of the surface properties due to precipitation or the like.

Examples of the sulfenamides include *N*-cyclohexyl-2-benzothiazolyl sulfenamide, *N,N*-dicyclohexyl-2-benzothiazolyl sulfenamide, *N-tert*-butyl-2-benzothiazolyl sulfenamide, *N*-oxydiethylene-2-benzothiazolyl sulfenamide, *N*-methyl-2-benzothiazolyl sulfenamide, *N*-ethyl-2-benzothiazolyl sulfenamide, *N*-propyl-2-benzothiazolyl sulfenamide, *N*-butyl-2-benzothiazolyl sulfenamide, *N*-pentyl-2-benzothiazolyl sulfenamide, *N*-hexyl-2-benzothiazolyl sulfenamide, *N*-pentyl-2-benzothiazolyl sulfonamide, *N*-octyl-2-benzothiazolyl sulfenamide, *N*-2-ethylhexyl-2-benzothiazolyl sulfenamide, *N*-decyl-2-benzothiazolyl sulfenamide, *N*-dodecyl-2-benzothiazolyl sulfenamide, *N*-stearyl-2-benzothiazolyl sulfenamide, *N,N*-dimethyl-2-benzothiazolyl sulfenamide, *N,N*-diethyl-2-benzothiazolyl sulfenamide, *N,N*-dipropyl-2-benzothiazolyl sulfenamide, *N,N*-dibutyl-2-benzothiazolyl sulfenamide, *N,N*-dipentyl-2-benzothiazolyl sulfenamide, *N,N*-dihexyl-2-benzothiazolyl sulfenamide, *N,N*-dipentyl-2-benzothiazolyl sulfenamide, *N,N*-dioctyl-2-benzothiazolyl sulfenamide, *N,N*-di-2-ethylhexylbenzothiazolyl sulfenamide, *N*-decyl-2-benzothiazolyl sulfenamide, *N,N*-didodecyl-2-benzothiazolyl sulfenamide, and *N,N*-distearyl-2-benzothiazolyl sulfenamide. Thereamong, *N*-cyclohexyl-2-benzothiazolyl sulfenamide, *N-tert*-butyl-2-benzothiazolyl sulfenamide and *N*-oxydiethylene-2-benzothiazole sulfenamide are preferred because of their high reactivity. Further, for example, *N*-cyclohexyl-2-benzothiazolyl sulfenamide and *N*-oxydiethylene-2-benzothiazolyl sulfenamide are particularly preferred since they are highly soluble even when added to a relatively nonpolar polymer and are, therefore, unlikely to induce a reduction in spinnability and the like caused by deterioration of the surface properties due to precipitation or the like.

Examples of the thiurams include tetramethyl thiuram disulfide, tetraethyl thiuram disulfide, tetrapropyl thiuram disulfide, tetraisopropyl thiuram disulfide, tetrabutyl thiuram disulfide, tetrapentyl thiuram disulfide, tetrahexyl thiuram disulfide, tetraheptyl thiuram disulfide, tetraoctyl thiuram disulfide, tetranonyl thiuram disulfide, tetradecyl thiuram disulfide, tetradodecyl thiuram disulfide, tetrastearyl thiuram disulfide, tetrabenzyl thiuram disulfide, tetrakis(2-ethylhexyl) thiuram disulfide, tetramethyl thiuram monosulfide, tetraethyl thiuram monosulfide, tetrapropyl thiuram monosulfide, tetraisopropyl thiuram monosulfide, tetrabutyl thiuram monosulfide, tetrapentyl thiuram monosulfide, tetrahexyl thiuram monosulfide, tetraheptyl thiuram monosulfide, tetraoctyl thiuram monosulfide, tetranonyl thiuram monosulfide, tetradecyl thiuram monosulfide, tetradodecyl thiuram monosulfide, tetrastearyl thiuram monosulfide, tetrabenzyl thiuram monosulfide, and dipentamethylene thiuram tetrasulfide. Thereamong, tetramethyl thiuram disulfide, tetraethyl thiuram disulfide, tetrabutyl thiuram disulfide, and tetrakis(2-ethylhexyl) thiuram disulfide are preferred because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, tetrabutyl thiuram disulfide and tetrakis(2-ethylhexyl) thiuram disulfide are particularly preferred.

Examples of the dithiocarbamates include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc *N*-pentamethylene dithiocarbamate, zinc *N*-ethyl-*N*-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper *N*-pentamethylene dithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium *N*-pentamethylene dithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate , ferric di(2-ethylhexyl)dithiocarbamate, ferric didecyldithiocarbamate, ferric didodecyldithiocarbamate, ferric *N*-pentamethylene dithiocarbamate, and ferric dibenzyldithiocarbamate. Thereamong, zinc *N*-ethyl-*N*-phenyldithiocarbamate, zinc dimethyldithiocarbamate, zinc diethyldithiocarbamate, and zinc dibutyldithiocarbamate are desirable because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, zinc dibutyldithiocarbamate is particularly preferred.

Examples of the xanthates include zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium octylxanthate, sodium 2-ethylhexylxanthate, sodium decylxanthate, and sodium dodecylxanthate. Thereamong, zinc isopropylxanthate is preferred because of its high reactivity.

The vulcanization accelerator (M) may be used in the form of being preliminarily dispersed in an inorganic filler, an oil, a polymer or the like and incorporated into the sheath-portion resin of the rubber-reinforcing core-sheath fibers. Such vulcanization accelerators and retardants may be used individually, or in combination of two or more thereof.

The content of the vulcanization accelerator (M) can be 0.05 to 20 parts by mass, particularly 0.2 to 5 parts by mass, with respect to a total of 100 parts by mass of the resin components such as an olefin-based polymer contained in the resin material constituting the sheath portion. By controlling the content of the vulcanization accelerator in the above-described range, an effect of improving the adhesion between the resin material and a rubber can be favorably attained.

In the resin material constituting the sheath portion, for the purpose of, for example, improving the adhesion at the interface with an adherend rubber composition, a thermoplastic rubber cross-linked with a polypropylene-based copolymer (TPV), any of "other thermoplastic elastomers (TPZ)" in the classification of thermoplastic elastomers described in JIS K6418, or the like may be incorporated in addition to the above-described components. These components enable to finely disperse a partially or highly cross-linked rubber into a continuous phase of the matrix of a thermoplastic resin composition of the resin material. Examples of the cross-linked thermoplastic rubber include acrylonitrile-butadiene rubbers, natural rubbers, epoxidized natural rubbers, butyl rubbers, and ethylene-propylene-diene rubbers. Examples of the "other thermoplastic elastomers (TPZ)" include syndiotactic-1,2-polybutadiene resins and *trans*-polyisoprene resins.

In the above-described high-melting-point resin and olefin-based polymer, in order to add other properties such as oxidation resistance, an additive(s) normally added to a resin can also be incorporated within a range that does not markedly impair the effects of the present invention and the working efficiency in spinning and the like. As such additional components, various conventionally known additives that are used as additives for polyolefin resins, examples of which include a nucleating agent, an antioxidant, a neutralizer, a light stabilizer, a process oil, an ultraviolet absorber, a lubricant, an antistatic agent, a filler (O), a metal deactivator, a peroxide, an anti-microbial fungicide, a fluorescence whitener and a vulcanization accelerating aid (N) used as an additive for rubber compositions, as well as other additives can be used.

Examples of the vulcanization accelerating aid (N) include basic inorganic metal compounds, such as formates, acetates, nitrates, carbonates, bicarbonates, oxides, hydroxides, and alkoxides of monovalent metals (e.g., lithium, sodium, and potassium), polyvalent metals (e.g., magnesium, calcium, zinc, copper, cobalt, manganese, lead, and iron) and the like.

Specific examples thereof include metal hydroxides, such as magnesium hydroxide, calcium hydroxide, sodium hydroxide, lithium hydroxide, potassium hydroxide, and copper hydroxide; metal oxides, such as magnesium oxide, calcium oxide, zinc oxide (zinc white), and copper oxide; and metal carbonates, such as magnesium carbonate, calcium carbonate, sodium carbonate, lithium carbonate, and potassium carbonate.

Thereamong, as an alkali metal salt, a metal oxide or a metal hydroxide is preferred, and magnesium hydroxide or zinc oxide is particularly preferred.

Examples of the filler (O) include inorganic particulate carriers, such as alumina, silica alumina, magnesium chloride, calcium carbonate and talc, as well as smectites, vermiculites and micas, such as talc, montmorillonite, sauconite, beidellite, nontronite, saponite, hectorite, stevensite, bentonite and taeniolite; and porous organic carriers, such as polypropylenes, polyethylenes, polystyrenes, styrene-divinylbenzene copolymers, and acrylic acid-based copolymers. These fillers can be incorporated for reinforcement of the sheath portion when, for example, the sheath portion does not have sufficient fracture resistance and a crack is thus generated in the sheath portion to cause fracture during fusion of the sheath portion with an adherend rubber.

Examples of a carbon black include furnace blacks, such as SAF carbon black, SAF-HS carbon black, ISAF carbon black, ISAF-HS carbon black, and ISAF-LS carbon black.

Examples of the nucleating agent include sodium 2,2-methylene-bis(4,6-di-*t*-butylphenyl)phosphate, talc, sorbitol compounds such as 1,3,2,4-di(*p*-methylbenzylidene)sorbitol, and aluminum hydroxy-di(t-butylbenzoate).

Examples of the antioxidant include phenolic antioxidants, such as tris-(3,5-di-*t*-butyl-4-hydroxybenzyl)isocyanurate, 1,1,3-tris(2-methyl-4-hydroxy-5-*t*-butylphenyl)butane, octadecyl-3-(3,5-di-*t*-butyl-4-hydroxyphenyl)propionate, pentaerythritol-tetrakis{3-(3,5-di-*t*-butyl-4-hydroxyphenyl)propionate}, 1,3,5-trimethyl-2,4,6-tris(3,5-di-*t*-butyl-4-hydroxybenzyl)benzene, 3,9-bis[2-[3-(3-*t*-butyl-4-hydroxy-5-methylphenyl)propionyloxy}-1,1-dimethylethyl]-2,4,8,1 0-tetraoxaspiro[5,5]undecane, and 1,3,5-tris(4-*t*-butyl-3-hydroxy-2,6-dimethylbenzyl)isocyanuric acid.

Examples of a phosphorus-based antioxidant include tris(mixed-, mono-, or di-nonylphenyl phosphite), tris(2,4-di-*t*-butylphenyl)phosphite, 4,4'-butylidene-bis(3-methyl-6-*t*-butylphenyl-di-tridecyl)phosphite, 1,1,3-tris(2-methyl-4-di-tridecylphosphite-5-*t*-butylphenyl)butane, bis(2,4-di-*t*-butylphenyl)pentaerythritol diphosphite, tetrakis(2,4-di-*t*-butylphenyl)-4,4'-biphenylene diphosphonite, tetrakis(2,4-di-*t*-butyl-5-methylphenyl)-4,4'-biphenylene diphosphonite, and bis(2,6-di-*t*-butyl-4-methylphenyl)pentaerythritol diphosphite. Examples of a sulfur-based antioxidant include distearyl thiodipropionate, dimyristyl thiodipropionate, and pentaerythritol tetrakis(3-lauryl thiopropionate).

Examples of the neutralizer include calcium stearate, zinc stearate, and hydrotalcite.

Examples of a hindered amine-based stabilizer include polycondensates of dimethyl succinate and 1-(2-hydroxyethyl)-4-hydroxy-2,2,6,6-tetramethylpiperidine, tetrakis(1,2,2,6,6-pentamethyl-4-piperidyl)-1,2,3,4-butane tetracarboxylate, bis(1,2,2,6,6-pentamethyl-4-piperidyl)sebacate, *N,N*-bis(3-aminopropyl)ethylenediamine-2,4-bis{*N*-butyl-*N*-(1,2,2,6,6-pentamethyl-4-piperid yl)aminol-6-chloro-1,3,5-triazine condensate, bis(2,2,6,6-tetramethyl-4-piperidyl)sebacate, poly[16-(1,1,3,3-tetramethylbutyl)imino-1,3,5-triazine-2,4-diyl]{(2,2,6,6-tetramethyl-4-piperi dyl)imino}hexamethylene{2,2,6,6-tetramethyl-4-piperidyl}imino], and poly[(6-mofpholino-*s*-triazine-2,4-diyl)[(2,2,6,6-tetramethyl-4-piperidyl)imino]hexamethylen e{(2,2,6,6-tetramethyl-4-piperidyl)imino}].

Examples of the lubricant include higher fatty acid amides, such as oleic acid amide, stearic acid amide, behenic acid amide, and ethylene bis-stearylamide; silicone oil; and higher fatty acid esters.

Examples of the antistatic agent include higher fatty acid glycerol esters, alkyl diethanolamines, alkyl diethanolamides, and alkyl diethanolamide fatty acid monoesters.

Examples of the ultraviolet absorber include 2-hydroxy-4-*n*-octoxybenzophenone, 2-(2'-hydroxy-3',5'-di-*t*-butylphenyl)-5-chlorobenzotriazole, and 2-(2'-hydroxy-3'-*t*-butyl-5'-methylphenyl)-5-chlorobenzotriazole.

Examples of the process oil include paraffinic process oils, naphthenic process oils, aromatic process oils, rosin-based process oils, and natural vegetable process oils. The process oil is preferably, for example, a naphthenic process oil, or a mixture of a naphthenic process oil and a straight asphalt.

Examples of the light stabilizer include *n*-hexadecyl-3,5-di-*t*-butyl-4-hydroxybenzoate, 2,4-di-*t*-butylphenyl-3',5'-di-*t*-butyl-4'-hydroxybenzoate, bis(2,2,6,6-tetramethyl-4-piperidyl)sebacate, dimethyl succinate-2-(4-hydroxy-2,2,6,6-tetramethyl-1-piperidyl)ethanol condensate, poly{6-[(1,1,3,3-tetramethylbutyl)amino]-1,3,5-triazine-2,4-diyl][(2,2,6,6-tetramethyl-4-pipe ridyl)imino]hexamethylene[(2,2,6,6-tetramethyl-4-piperidyl)imino] }, and *N,N'*-bis(3-aminopropyl)ethylenediamine-2,4-bis[*N*-butyl-*N*-(1,2,2,6,6-pentamethyl-4-piperid yl)amino-6-chloro-1,3,5-triazine condensate.

Particularly, from the standpoint of the combination of the core portion and the sheath portion, it is preferred to use, as the same olefin-based resins, a high-melting-point polyolefin resin for the core portion and a low-melting-point polyolefin resin for the sheath portion, since good compatibility is thereby attained between the core portion and the sheath portion. By using an olefin-based resin for both the core portion and the sheath portion, a high bonding strength is attained at the core-sheath polymer interface and sufficient peeling resistance is provided against interfacial peeling between the core portion and the sheath portion, which are different from those cases where different kinds of resins are used for the core portion and the sheath portion; therefore, the resultant can sufficiently exhibit properties as a composite fiber over a long period of time. Specifically, it is preferred to use a crystalline propylene homopolymer having a melting point of 150°C or higher as the high-melting-point polyolefin resin of the core portion and to use a polypropylene-based copolymer resin obtained by copolymerization of a polypropylene and a component copolymerizable with the polypropylene, such as an ethylene-propylene copolymer or an ethylene-butene-propylene ternary copolymer, particularly an ethylene-propylene random copolymer, as the low-melting-point polyolefin resin of the sheath portion. The high-melting-point polyolefin resin of the core portion is particularly preferably an isotactic polypropylene since it provides good fiber-forming properties and the like in spinning.

In this case, the melt flow index (melt flow rate: MFR) (MFR1) of the high-melting point polyolefin resin and the melt flow index (MFR2) of the low-melting-point polyolefin resin are not particularly restricted as long as they are in a range where these resins can be spun; however, the melt flow indices are preferably 0.3 to 100 g/10 min. The same applies to the melt flow index of the high-melting-point resin used in the core portion other than the high-melting point polyolefin resin.

Particularly, the melt flow index (MFR1) of the high-melting-point resin containing the high-melting point polyolefin resin can be selected to be in a range of preferably 0.3 to 18 g/10 min, particularly preferably 0.5 to 15 g/10 min, more preferably 1 to 10 g/10 min. The reason for this is because, with the MFR of the high-melting-point resin being in the above-described range, favorable spinning take-up and stretching properties are attained, and a melt of the high-melting-point resin of the core portion is prevented from being fluidized under the heating of the vulcanization step in the production of a rubber article, allowing the resultant to maintain a cord form.

The melt flow index (MFR2) of the low-melting-point polyolefin resin is preferably 5 g/10 min or higher, particularly preferably 5 to 70 g/10 min, more preferably 10 to 30 g/10 min. In order to improve the thermal fusibility of the low-melting-point polyolefin resin of the sheath portion, a resin having a high MFR is preferably used since such a resin is likely to flow into and fill a gap with an adherend rubber. On the other hand, in cases where other reinforcing member (e.g., a ply cord or a bead core) is provided in the vicinity of where the composite fibers are arranged and the rubber covering the composite fibers has an unintended void, an excessively high MFR2 may cause the molten low-melting-point polyolefin resin to wet-spread on the surface of the fiber material of the ply cord; therefore, the MFR2 is particularly preferably not higher than 70 g/10 min. The MFR2 is more preferably not higher than 30 g/10 min since, in this case, when the composite fibers are in contact with each other, such a phenomenon of fiber-fiber fusion in which the molten low-melting-point polyolefin resin wet-spreads and forms aggregated fiber conjugates is less likely to occur. Further, an MFR2 of not higher than 20 g/10 min is still more preferred since it improves the fracture resistance of the resin of the sheath portion at the time of peeling the fused rubber, and the sheath portion is thus strongly adhered with the rubber.

The MFR values (g/10 min) are determined in accordance with JIS K7210, and the melt flow rate of a polypropylene-based resin material and that of a polyethylene-based resin material are measured at a temperature of 230°C under a load of 21.18 N (2,160 g) and at a temperature of 190°C under a load of 21.18 N (2,160 g), respectively.

With regard to the ratio of the core portion and the sheath portion in the composite fibers of the present invention, the ratio of the core portion in the composite fibers is preferably 10 to 95% by mass, more preferably 30 to 80% by mass. When the ratio of the core portion is excessively small, the strength of the composite fibers is reduced and sufficient reinforcing performance may not be attained. The ratio of the core portion is particularly preferably 50% by mass or higher since this can enhance the reinforcing performance. However, when the ratio of the core portion is excessively high, the core portion is likely to be exposed from the composite fibers due to an excessively low ratio of the sheath portion; therefore, sufficient adhesion with a rubber may thus not be attained.

In the present invention, the form of the composite fibers (C) applied to the reinforcing layer is not particularly restricted; however, the composite fibers (C) are preferably in the form of a monofilament or a cord in which 10 or less monofilaments are bundled, more preferably a monofilament cord. The reason for this is because, if the assembly of the composite fibers (C) of the present invention is in the fiber form of a cord in which more than 10 monofilaments are bundled, a twisted cord, a nonwoven fabric or a textile, since the low-melting-point resin material (B) constituting the sheath portion is melted when the fiber assembly is vulcanized in a rubber, the filaments are fused with each other and the resulting molten bodies permeate each other, whereby an aggregated foreign material may be formed in a rubber article. When such a foreign material is generated, a crack may develop from the aggregated foreign material in the rubber article due to strain generated by rolling during the use of the tire, and this may cause separation. Accordingly, when the composite fibers (C) form a fiber assembly in the rubber article, since the greater the number of bundled filaments, the less likely the rubber is to permeate between the resulting cords and the more likely an aggregated foreign material is to be formed, it is generally preferred that the number of the filaments to be bundled be 10 or less.

Further, in the reinforcing layer, the composite fibers (C) are particularly preferably in the form of a monofilament cord. The reason for this is because, since a monofilament cord has smaller initial elongation than an ordinary twisted cord, the force of restraining the reinforcing layer as a main cord reinforcing layer to the carcass ply is further improved to more effectively disperse and suppress the above-described shearing strain, whereby the crack-inhibiting effect can be further enhanced.

As for a method of producing the composite fibers (monofilament) of the present invention, the composite fibers can be produced by a wet-heating and stretching method using two uniaxial extruders for the core material and the sheath material, along with a core-sheath type composite spinneret. The spinning temperature can be set at 140°C to 330°C, preferably 160 to 220°C, for the sheath component; and at 200 to 330°C, preferably 210°C to 300°C, for the core component. Wet-heating can be carried out using, for example, a wet-heating apparatus at 100°C, or a hot water bath at 55 to 100°C, preferably at 95 to 98°C. From the standpoint of thermal fusibility, it is not preferred to cool the resultant once and then perform re-heating and stretching, since crystallization of the sheath portion is thereby facilitated. The stretching ratio is preferably 1.5 or higher from the standpoint of crystallization of the core portion.

In the present invention, the fineness, namely the fiber thickness, of the composite fibers (C) is preferably in a range of 50 dtex to 4,000 dtex, more preferably 500 dtex to 1,200 dtex. When the fiber thickness of the composite fibers (C) is less than 50 dtex, the strength is reduced and the cord is thus likely to be broken. Particularly, in the case of a tire, in order to inhibit cord breakage during the processing of various steps in the production of the tire, the fiber thickness of the composite fibers (C) is more preferably not less than 500 dtex. The upper limit of the fiber thickness of the reinforcing material is not particularly defined as long as the reinforcing material can be arranged in the members of a rubber article such as a tire; however, it is preferably 4,000 dtex or less. The reason for this is because, in the case of a monofilament cord, not only a large fiber thickness leads to a lower spinning speed at the time of spinning and the economic efficiency in the processing is thus deteriorated, but also it is difficult to bend a thread having a large thickness at the time of winding the thread around a winding tool such as a bobbin and this deteriorates the working efficiency. In the present invention, the "fiber thickness" means a fiber size (in accordance with JIS L0101) which is determined for a monofilament itself in the case of a monofilament.

One of the characteristic features of the monofilament cord composed of the composite fibers (C) of the present invention is that it is highly adhesive with a rubber even when the composite fibers (C) have a single fiber thickness of 50 dtex or greater. When the fiber thickness of the composite fibers (C) is less than 50 dtex, a problem in adhesion with a rubber is unlikely to occur even when the fibers are not adhered by an adhesive composition or through fusion between the fiber resin and a rubber. The reason for this is because, since a small single fiber diameter makes the cord-cutting stress smaller than the force that causes peeling of the adhered parts, the cord is broken before the cord and a rubber are detached at their interface when the adhesiveness is evaluated by peeling or the like. This phenomenon is also called "fluff adhesion" and can be observed at a single fiber thickness of less than 50 dtex, which is equivalent to the fluff thickness.

Further, in the tire of the present invention, the post-vulcanization tensile strength at break of the reinforcing layer 4 obtained by rubber-coating the composite fibers is preferably not less than 29 N/mm$^2$.

In the tire of the present invention, the composite fibers (C) can be arranged in any direction at an angle of 0° to 90° with respect to the tire radial direction. As for a preferred orientation direction of the composite fibers (C), it is preferred that the composite fibers (C) be oriented at an angle of 0° with respect to the direction in which the reinforcing cords of the carcass ply whose ends are not coated for an adhesion treatment are arranged since this enables to suppress detachment from the cord end surface in the vertical direction; however, since the vicinity of the cord ends is coated even when the composite fibers (C) are arranged at other angle, an effect of suppressing detachment of the cord ends can be attained.

In the present invention, the end count of the core-sheath fibers is preferably 5 to 65 fibers/50 mm, more preferably 10 to 60 fibers/50 mm. When the density of the embedded core-sheath fibers is less than 5 fibers/50 mm, the crack generation-inhibiting effect may be insufficient. Meanwhile, when the end count of the core-sheath fibers exceeds 65 fibers/50 mm, the core-sheath fibers are close to one another and may be fused together, making detachment more likely to occur in the vicinity of the fiber interface due to a strain stress, which is not preferred.

In the tire of the present invention, a reinforcing layer 4 that extends from the tire radial-direction inner side of the belt layer 3 in the end region of the tread portion 13 toward the inner side of the tire radial direction along the carcass ply 2 is arranged, and this reinforcing layer 4 may be any layer as long as it is composed of specific core-sheath fibers. The internal structure of the reinforcing layer 4 is the same as in an ordinary pneumatic tire and can be appropriately decided as desired.

Further, the illustrated tire 10 includes: as its skeleton, at least one carcass ply 2 that toroidally extends between the bead cores 1 each embedded in the pair of the bead portions 11; and at least one belt layer 3 that is arranged on the tire radial-direction outer side of the carcass ply 2 in the crown portion. For example, although not illustrated in the drawings, an inner liner is arranged on the tire radial-direction inner side of the carcass ply 2, and a bead filler 5 is usually arranged on the tire radial-direction outer side of each bead core 1.

The illustrated tire is a passenger vehicle tire; however, the present invention can be applied to any tire with no restriction on the tire type, including tires for trucks and busses and large-sized tires.

In the present invention, as a method of producing a composite treat in which the above-described core-sheath fibers are embedded, first, the core-sheath fibers are parallelly arranged and coated with a rubber to prepare strips of a sheet-form rubber-fiber composite (composite preparation step). This step can be carried out by, for example, a method of parallelly arranging a prescribed number of the core-sheath fibers and then passing the fibers between rolls to coat the fibers with a rubber from both above and below, or a method of horizontally transferring fibers that have been spun into a core-sheath form using a co-extruder or the above-described insulation-type extruder and subsequently coating these fibers with a rubber. The sheet-form rubber-fiber composite contains a single row of the core-sheath fibers in the thickness direction, and the sheet thickness may be, for example, 0.6 mm to 1.5 mm. In the present invention, a sheet of rubber-coated cords can be prepared by an insulation-type extrusion method using the inserter caps illustrated in FIGs. 5A and 5B. In this step, the end count of the core-sheath fibers can be modified by appropriately adjusting the paralleling interval (fiber spacing) of the core-sheath fibers.

Next, the thus obtained rubber-fiber composite is cut at an arbitrary angle at which a reinforcing material is desired to be arranged as a tire reinforcing layer with respect to the longitudinal direction of the core-sheath fibers, and the thus cut strips are sequentially joined to obtain a composite treat of the rubber-fiber composite (cutting step).

Then, in primary molding of a green tire, in the case of the tire illustrated in FIG. 1, a cylindrical molded body is formed by winding a rubber sheet serving as an inner liner and a carcass ply in the circumferential direction on a tire molding drum that is a cylindrical mold and, subsequently, the above-obtained treat of the rubber-fiber composite is pasted onto the entire circumference of the carcass ply such that the reinforcing layer 4 is arranged in both end regions of the tread portion over a section starting from a position corresponding to the tire radial-direction outer end 4a to a position corresponding to the tire radial-direction inner end 4b, after which tire molding members are pasted together to obtain a primary molded green tire.

Meanwhile, in the case of the tire illustrated in FIG. 2, a cylindrical molded body is formed by winding a rubber sheet serving as an inner liner in the circumferential direction on a tire molding drum that is a cylindrical mold and, subsequently, the above-obtained treat of the rubber-fiber composite is pasted onto the entire circumference of the inner liner such that the reinforcing layer 4 is arranged in both end regions of the tread portion over a section starting from a position corresponding to the tire radial-direction outer end 4a to a position corresponding to the tire radial-direction inner end 4b, after which a carcass ply is further wound on the entire circumference of the resulting laminate, and tire molding members are pasted together to obtain a primary molded green tire (pasting step).

Thereafter, in secondary molding of the green tire, the composite treat is expanded to a prescribed outer diameter along with the carcass ply (expansion step), whereby a molded green tire can be produced.

The tire of the present invention can be produced by vulcanizing the green tire obtained in the above-described manner at a vulcanization temperature of 140°C to 190°C for 3 to 50 minutes in accordance with a conventional method (vulcanization step).

EXAMPLES

The present invention will now be described in more detail by way of Examples thereof.

As the reinforcing cords of the reinforcing layer, composite fibers (C) in which the respective materials shown in Tables 1 and 2 below were used as sheath and core materials and which had been dried using a vacuum dryer were employed.

[Table 1]

| | | | |
|---|---|---|---|
| Olefin-based polymer (D) (base polymer of sheath-portion resin material (B)) | Sheath resin material (H) | H-1 | Propylene-ethylene random copolymer (manufactured by Japan Polypropylene Corporation, trade name "WSX03", MFR at 190°C: 25 g/10 min, melting peak temperature (melting point): 126°C) |
| | | H-2 | Propylene-ethylene-butene random copolymer (manufactured by Japan Polypropylene Corporation, trade name "FX4G", MFR at 190°C: 5.0 g/10 min, melting peak temperature (melting point): 125°C) |
| | Sheath resin material (I) | I-1 | Ethylene-propylene-diene rubber (EPDM) (manufactured by JSR Corporation, trade name "EP331", Mooney viscosity ML(1+4): 23, ENB content: 3.4%, melting peak temperature (melting point): 160°C (polypropylene-derived peak: 160°C, polyethylene-derived peak: 129°C)) |
| | Sheath resin material (J) | J-1 | Zn-neutralized ionomer of an ethylene-methacrylic acid copolymer; a mixture obtained by kneading 100 parts by mass of an ethylene-methacrylic acid copolymer (manufactured by Du Pont-Mitsui Polychemicals Co., Ltd., trade name "NUCREL N1560", MFR at 190°C: 60 g/10 min, methacrylic acid content: 15% by mass, melting point: 90°C, acid value: 98 mg-KOH/g) with 5.9 parts by mass of zinc oxide at 200°C, degree of neutralization = 70% |
| | Sheath resin material (K) | K-1 | Linear low-density polyethylene (manufactured by Japan Polypropylene Corporation, trade name "HARMOREX NJ744", MFR at 190°C: 12 g/10 min, melting peak temperature (melting point): 120°C) |
| | | K-2 | Polybutadiene (manufactured by JSR Corporation, trade name "RB830", MFR at 150°C: 3 g/10 min, melting peak temperature (melting point): 105°C, syndiotactic 1,2-polybutadiene polymer, density:0.91) |
| Added components of sheath-portion resin material (B) | Styrene-based elastomer (L) | L-1 | Styrene-butadiene-styrene block copolymer (SBS) (manufactured by JSR Corporation, trade name "TR2827", MFR at 200°C: 11 g/10 min, styrene content: 24%) |
| | | L-2 | Amine-modified styrene-ethylene-butylene-styrene copolymer (manufactured by JSR Corporation, trade name "DYNARON 8630P", MFR at 230°C: 15 g/10 min, styrene content: 15%) |
| | Vulcanization accelerator (M) | M-1 | $N$-cyclohexyl-2-benzothiazole sulfonamide (manufactured by Sanshin Chemical Industry Co., Ltd., trade name "SANCELER CM", JIS abbreviation: CBS) |
| | | M-2 | tetrakis(2-ethylhexyl) thiuram disulfide (manufactured by Ouchi Shinko Chemical Industrial Co., Ltd., trade name "NOCCELER TOT-N) |
| | Vulcanization accelerating aid (N) | N-1 | Magnesium hydroxide (reagent manufactured by Wako Pure Chemical Industries, Ltd., content: 95% or higher (titration value)) |
| | | N-2 | Zinc oxide (zinc white manufactured by Hakusuitech Co., Ltd.) |
| | Filler (O) | O-1 | Carbon black, ISAF (manufactured by Asahi Carbon Co., Ltd., trade name "ASAHI #80", iodine adsorption amount = 118 g/kg, DBP oil absorption amount (Method A) = 113 ml/100 g, $N_2SA$ (nitrogen adsorption specific surface area) = 115 $m^2$/g, average particle size = 22 nm) |

[Table 2]

| Core-portion material (A) | Core-portion resin material (P) | P-1 | Propylene homopolymer (manufactured by Japan Polypropylene Corporation, trade name "NOVATEC PP FY6H", MFR at 230°C: 1.9 g/10 min, melting peak temperature (melting point): 165°C) |
|---|---|---|---|
| | Core-portion resin material (Q) | Q-1 | Polytrimethylene terephthalate (manufactured by Shell Chemicals Japan Ltd., trade name "CORTERRA 9240", melting peak temperature (melting point): 228°C, IV value: 0.92, melting start temperature: 213°C) |

1) Production of Test Fibers

Using the respective materials shown in Tables 1 and 2 above as a core component and a sheath component as well as two cp50-mm uniaxial extruders for the core material and the sheath material along with a core-sheath type composite spinneret having an orifice size of 1.5 mm, the materials were melt-spun at the respective spinning temperatures shown in Tables below and a spinning rate of 75 m/min while adjusting the discharge amount to be about 15 g/min such that a sheath-core ratio of 3:7 was attained in terms of mass ratio. The resultants were subsequently stretched in a 98°C hot water bath at a stretching ratio of 2.0, whereby core-sheath type composite monofilaments having a fineness of 950 dtex were obtained.

2) Production of Rubber-Fiber Composite Strips

Using the inserter caps illustrated in FIGs. 5A and 5B, core-sheath type composite fibers (fineness: 950 dtex) obtained using the respective core-portion and sheath-portion materials shown in Tables 3 to 6 below were parallelly arranged and rubber-coated at an end count of 30 fibers/50 mm by an insulation-type extrusion method, whereby by a 0.65mm-thick sheet-form rubber-fiber composite was produced. This rubber-fiber composite was cut in accordance with the orientation angle and width of the reinforcing layer shown in the tables, and the thus cut composite strips were pasted together in the lateral direction with no gap to obtain a rubber-fiber composite treat.

It is noted here that, in the production of a rubber-fiber composite treat of Comparative Example 5, the tire cords made of 66 nylon (940 dtex/1, twist coefficient: 0.19) disclosed in Example 5 of Japanese Unexamined Patent Application Publication No. 2009-184563, which had been surface-treated with an adhesive composition, were embedded at an end count of 30 cords/50 mm, and the resulting composite was cut at an angle according to the orientation angle of the reinforcing layer shown in the table below to obtain a rubber-fiber composite treat.

3) Production of Test Tires

Test tires were produced by applying each rubber-fiber composite treat produced in the above 2) to a tire having a size of 155/65R13 (belt width Bw: 120 mm).

i) Production of Tires in which Reinforcing Layer was Arranged on Outer Side of Carcass Ply

(Examples 1 to 16 and Comparative Examples 1 to 5)

In primary molding of a green tire, the above-obtained composite treat was arranged on the entire circumference on the tire radial-direction outer side of a carcass ply such that the composite treat extended from the tire radial-direction inner side of a belt layer in end regions of a tread portion toward the inner side of the tire radial direction along the carcass ply and that the respective reinforcing positions and arrangement dimensions of La, Lb and Lc (see FIG. 3) that are shown in Tables were attained. Specifically, a cylindrical molded body was formed by winding an inner liner and a carcass ply in the circumferential direction on a tire molding drum that is a cylindrical mold and, subsequently, the rubber-fiber composite treat was pasted onto the entire circumference of the carcass ply such that the reinforcing layer 4 was arranged in both end regions of the tread portion over a section starting from a position corresponding to the tire radial-direction outer end 4a to a position corresponding to the tire radial-direction inner end 4b, after which tire molding members were pasted together to obtain a primary molded green tire.

Thereafter, in secondary molding of this green tire, the composite treat was expanded to a prescribed outer diameter along with the carcass ply, and the resulting green tire was vulcanized at a temperature of 186°C for 10 minutes, whereby the test tires of Examples 1 to 16 and Comparative Examples 1 to 5 were each produced.

It is noted here that the orientation angle of the reinforcing layer was defined as an angle formed by the tire radial direction and the reinforcing material.

ii) Production of Tire in which Reinforcing Layer was Arranged on Inner Side of Carcass Ply

(Example 17)

In primary molding of a green tire, the above-obtained composite treat was arranged on the entire circumference on the tire radial-direction inner side of a carcass ply such that the composite treat extended from the tire radial-direction inner side of a belt layer in end regions of a tread portion toward the inner side of the tire radial direction along the carcass ply and that the reinforcing position and arrangement dimensions of La, Lb and Lc (see FIG. 3) that are shown in Table 5 were attained. Specifically, a cylindrical molded body was formed by winding a rubber sheet serving as an inner liner in the circumferential direction on a tire molding drum that is a cylindrical mold and, subsequently, the rubber-fiber composite treat was pasted onto the entire circumference of the inner liner such that the reinforcing layer 4 was arranged in both end regions of the tread portion over a section starting from a position corresponding to the tire radial-direction outer end 4a to a position corresponding to the tire radial-direction inner end 4b, after which the carcass ply was further wound on the entire circumference of the resulting laminate, and tire molding members were pasted together to obtain a primary molded green tire.

Thereafter, in secondary molding of this green tire, the composite treat was expanded to a prescribed outer diameter along with the carcass ply, and the resulting green tire was vulcanized at a temperature of 186°C for 10 minutes, whereby the test tire of Example 17 was produced.

It is noted here that the orientation angle of the reinforcing layer was defined as an angle formed by the tire radial direction and the reinforcing material.

(Evaluation of Durability against Detachment under Belt End Portion based on Drum Running Distance)

The thus obtained test tires (tire size: 155/65R13) of Examples 1 to 17 and Comparative Examples 1 to 5 were each pressed against and rotated at a high speed on a streel drum of 3 m in diameter to evaluate the durability. Each tire was pressed at a camber angle of -1° and a slip angle of 0° under a load of 5.0 kN. Further, each tire was mounted on a 15 × 4.00B rim, and the tire internal pressure was set at 170 kPa, which was lower than the specified internal pressure of 210 kPa. The reason for setting the tire internal pressure to be lower than the specified internal pressure was to increase the amount of tire deflection and thereby create a condition where failure of the tire would be facilitated. Each tire was continuously rolled under load at a speed of 200 km/h until the shoulder portion 14 was broken, and the rolled distance up to the breakage was measured and compared. The results thereof are presented in terms of life index, taking the rolled distance of Comparative Example 1 as 100. A larger index value indicates superior and more favorable durability.

(Evaluation of Rolling Resistance)

Further, in this test, using a drum tester of 1.7 m in diameter having an iron-plate surface, the rolling resistance performance was determined for all of the tires under the conditions of: speed = 80 km/h, load = 3.3 kN, and internal pressure = 210 kPa. The rim used in this test had a size of 13 × 4.00B. The test results are presented in terms of index, taking the rolling resistance of Comparative Example 1 as 100. A smaller index value indicates lower and more favorable rolling resistance.

[Table 3]

| | | Comparative Example 1 | Comparative Example 2 | Example 1 | Example 2 | Example 3 | Example 4 | Comparative Example 3 |
|---|---|---|---|---|---|---|---|---|
| Core-portion polymer (A) | Material | - | P-1 | P-1 | P-1 | P-1 | P-1 | Q-1 |
| | Melting point (°C) | - | 165 | 165 | 165 | 165 | 165 | 228 |
| Sheath-portion material mixture (B) | Sheath resin material 1 | - | - | H-1 | H-1 | H-2 | I-1 | - |
| | (parts by mass) | - | - | 100 | 100 | 100 | 100 | - |
| | Sheath resin material 2 | - | - | - | - | - | K-1 | - |
| | (parts by mass) | - | - | - | - | - | 40 | - |
| | Styrene-based elastomer | - | - | - | L-1 | L-1 | - | - |
| | (parts by mass) | - | - | - | 75 | 60 | - | - |
| | Vulcanization accelerator | - | - | - | - | M-1 | M-2 | - |
| | (parts by mass) | - | - | - | - | 3 | 5 | - |
| | Vulcanization accelerating aid | - | - | - | - | N-2 | N-1 | - |
| | (parts by mass) | - | - | - | - | 2 | 1.5 | - |
| | Filler | - | - | - | - | O-1 | - | - |
| | (parts by mass) | - | - | - | - | 20 | - | - |
| Spinneret for spinning | Shape | - | sheath-core type composite spinneret | sheath-core composite type spinneret | sheath-core type composite spinneret | sheath-core type composite spinneret | sheath-core type composite spinneret | sheath-core type composite spinneret |
| | Orifice size (mm) | - | 1.5 | 1.5 | 1.5 | 1.5 | 1.5 | 1.5 |
| Sheath/core composite ratio | | - | 0/10 | 3/7 | 3/7 | 3/7 | 3/7 | 3/7 |
| Spinning temperature | Core portion (°C) | - | 215 | 215 | 215 | 215 | 215 | 265 |
| | Sheath portion (°C) | - | - | 180 | 180 | 180 | 180 | 200 |
| Take-up rate (m/min) | | - | 75 | 75 | 75 | 75 | 75 | 75 |
| Stretching method | | - | wet heating 98°C hot water | wet heating 98°C hot water | wet heating 98°C hot water | wet heating 98°C hot water | wet heating 98°C hot water | wet heating 98°C hot water |
| Fineness (dtex) | | - | 950 | 950 | 950 | 950 | 950 | 950 |
| Cord form | | - | monofilament | monofilament | monofilament | monofilament | monofilament | monofilament |
| Orientation angle of reinforcing layer (angle with respect to the tire radial direction) (°) | | none | 45 | 45 | 45 | 45 | 45 | 45 |

Table 3 (continued)

| Reinforcing position (outside/inside of ply) | | | none | outside of ply | outside of ply | outside of ply | outside of ply | outside of ply | outside of ply |
|---|---|---|---|---|---|---|---|---|---|
| Reinforcing layer arrangement conditions | | La | - | 9 | 11 | 11 | 10 | 9 | 10 |
| | | Lb | - | 15 | 16 | 14 | 15 | 15 | 14 |
| | | Lc | - | 25 | 25 | 25 | 25 | 25 | 25 |
| | | Lb – La | - | 6 | 5 | 3 | 5 | 6 | 4 |
| | | Lc – Lb | - | 10 | 9 | 11 | 10 | 10 | 11 |
| | | sandwiching between 2A and 2B | - | none | none | none | none | none | none |
| Drum running distance (index) | | | 100 | 59 | 123 | 136 | 144 | 126 | 31 |
| Rolling resistance (index) | | | 100.0 | 100.9 | 97.4 | 97.6 | 97.5 | 98.1 | 100.6 |

[Table 4]

| | | | Example 5 | Example 6 | Example 7 | Example 8 | Example 9 | Example 10 | Example 11 |
|---|---|---|---|---|---|---|---|---|---|
| Core-portion polymer (A) | | Material | Q-1 | P-1 | P-1 | P-1 | P-1 | P-1 | P-1 |
| | | Melting point (°C) | 228 | 165 | 165 | 165 | 165 | 165 | 165 |
| Sheath-portion material mixture (B) | | Sheath resin material 1 | H-2 | H-1 | H-1 | H-1 | H-1 | I-1 | H-1 |
| | | (parts by mass) | 100 | 100 | 100 | 100 | 100 | 100 | 100 |
| | | Sheath resin material 2 | - | - | - | J-1 | J-1 | J-1 | J-1 |
| | | (parts by mass) | - | - | - | 25 | 25 | 25 | 25 |
| | | Styrene-based elastomer | L-2 | - | - | - | - | - | - |
| | | (parts by mass) | 75 | - | - | - | - | - | - |
| | | Vulcanization accelerator | - | - | - | - | - | - | - |
| | | (parts by mass) | - | - | - | - | - | - | - |
| | | Vulcanization accelerating aid | N-1 | - | - | N-1 | N-1 | N-1 | N-1 |
| | | (parts by mass) | 2.0 | - | - | 0.7 | 0.7 | 0.7 | 0.7 |
| | | Filler | - | - | - | - | - | - | - |
| | | (parts by mass) | - | - | - | - | - | - | - |
| Spinneret for spinning | | Shape | sheath-core type composite spinneret | sheath-core type composite spinneret | sheath-core type composite spinneret | sheath-core type composite spinneret | sheath-core type composite spinneret | sheath-core type composite spinneret | sheath-core type composite spinneret |
| | | Orifice size (mm) | 1.5 | 1.5 | 1.5 | 1.5 | 1.5 | 1.5 | 1.5 |
| Sheath/core composite ratio | | | 3/7 | 3/7 | 3/7 | 3/7 | 3/7 | 3/7 | 3/7 |
| Spinning temperature | | Core portion (°C) | 265 | 215 | 215 | 215 | 215 | 215 | 215 |
| | | Sheath portion (°C) | 200 | 180 | 180 | 180 | 180 | 180 | 180 |
| Take-up rate (m/min) | | | 75 | 75 | 75 | 75 | 75 | 75 | 75 |
| Stretching method | | | wet heating 98°C hot water | wet heating 98°C hot water | wet heating 98°C hot water | wet heating 98°C hot water | wet heating 98°C hot water | wet heating 98°C hot water | wet heating 98°C hot water |
| Fineness (dtex) | | | 950 | 950 | 950 | 950 | 950 | 950 | 950 |
| Cord form | | | monofilament | monofilament | monofilament | monofilament | monofilament | monofilament | monofilament |
| Orientation angle of reinforcing layer (angle with respect to the tire radial direction) (°) | | | 45 | 0 | 25 | 70 | 80 | 45 | 45 |

Table 4 (continued)

| Reinforcing position (outside/inside of ply) | | outside of ply | outside of ply | outside of ply | outside of ply | outside of ply | outside of ply | outside of ply |
|---|---|---|---|---|---|---|---|---|
| Reinforcing layer arrangement conditions | La | 12 | 10 | 11 | 11 | 10 | 5 | 15 |
| | Lb | 16 | 14 | 15 | 15 | 16 | 13 | 15 |
| | Lc | 25 | 24 | 25 | 24 | 25 | 25 | 26 |
| | Lb – La | 4 | 4 | 4 | 4 | 6 | 8 | 0 |
| | Lc – Lb | 9 | 10 | 10 | 9 | 9 | 12 | 11 |
| | sandwiching between 2A and 2B | none | none | none | none | none | none | none |
| Drum running distance (index) | | 118 | 142 | 140 | 136 | 133 | 125 | 118 |
| Rolling resistance (index) | | 98.5 | 97.2 | 97.6 | 97.1 | 97.7 | 99.0 | 98.2 |

[Table 5]

| | | Example 12 | Example 13 | Example 14 | Example 15 | Example 16 | Comparative Example 4 | Example 17 |
|---|---|---|---|---|---|---|---|---|
| Core-portion polymer (A) | Material | Q-1 | P-1 | P-1 | P-1 | P-1 | P-1 | P-1 |
| | Melting point (°C) | 228 | 165 | 165 | 165 | 165 | 165 | 165 |
| Sheath-portion material mixture (B) | Sheath resin material 1 | H-1 | H-1 | H-1 | H-1 | H-1 | H-1 | H-1 |
| | (parts by mass) | 100 | 100 | 100 | 100 | 100 | 100 | 100 |
| | Sheath resin material 2 | - | K-2 | K-2 | K-2 | K-2 | K-2 | K-2 |
| | (parts by mass) | - | 35 | 35 | 35 | 35 | 35 | 35 |
| | Styrene-based elastomer | L-1 | - | - | - | - | - | - |
| | (parts by mass) | 75 | - | - | - | - | - | - |
| | Vulcanization accelerator | - | - | - | - | - | - | - |
| | (parts by mass) | - | - | - | - | - | - | - |
| | Vulcanization accelerating aid | - | - | - | - | - | - | - |
| | (parts by mass) | - | - | - | - | - | - | - |
| | Filler | - | - | - | - | - | - | - |
| | (parts by mass) | - | - | - | - | - | - | - |

(continued)

| | | Example 12 | Example 13 | Example 14 | Example 15 | Example 16 | Comparative Example 4 | Example 17 |
|---|---|---|---|---|---|---|---|---|
| Spinneret for spinning | Shape | sheath-core type composite spinneret | sheath-core type composite spinneret | sheath-core type composite spinneret | sheath-core type composite spinneret | sheath-core type composite spinneret | sheath-core type composite spinneret | sheath-core type composite spinneret |
| | Orifice size (mm) | 1.5 | 1.5 | 1.5 | 1.5 | 1.5 | 1.5 | 1.5 |
| Sheath/core composite ratio | | 3/7 | 3/7 | 3/7 | 3/7 | 3/7 | 3/7 | 3/7 |
| Spinning temperature | Core portion (°C) | 245 | 215 | 215 | 215 | 215 | 215 | 215 |
| | Sheath portion (°C) | 195 | 180 | 180 | 180 | 180 | 180 | 180 |
| Take -up rate (m/min) | | 75 | 75 | 75 | 75 | 75 | 75 | 75 |
| Stretching method | | wet heating | wet heating | wet heating | wet heating | wet heating | wet heating | wet heating |
| | | 98°C hot water | 98°C hot water | 98°C hot water | 98°C hot water | 98°C hot water | 98°C hot water | 98°C hot water |
| Fineness (dtex) | | 950 | 950 | 950 | 950 | 950 | 950 | 950 |
| Cord form | | monofilament | monofilament | monofilament | monofilament | monofilament | monofilament | monofilament |
| Orientation angle of reinforcing layer (angle with respect to the tire radial direction) (°) | | 45 | 45 | 45 | 45 | 45 | 45 | 45 |
| Reinforcing position (outside/ inside of ply) | | outside of ply | outside of ply | outside of ply | outside of ply | outside of ply | outside of ply | inside of ply |

(continued)

| Reinforcing layer arrangement conditions | | Example 12 | Example 13 | Example 14 | Example 15 | Example 16 | Comparative Example 4 | Example 17 |
|---|---|---|---|---|---|---|---|---|
| | La | 11 | 13 | 5 | 5 | 36[*1] | 0[*4] | 10 |
| | Lb | 14 | 23 | 11 | 15 | 42 | 0[*4] | 14 |
| | Lc | 15 | 19 | 16 | 40 | 46 | 60[*2] | 25 |
| | Lb-La | 3 | 10 | 6 | 10 | 6 | 0 | 4 |
| | Lc - Lb | 1 | -4 | 5 | 25 | 4 | 60[*2] | 11 |
| | sandwiching between 2A and 2B | none | none | none | none | none | present [*3] | none |
| Drum running distance (index) | | 120 | 119 | 132 | 172 | 195 | 92 | 106 |
| Rolling resistance (index) | | 98.6 | 99.5 | 98.1 | 98.8 | 99.8 | 106.3 | 97.3 |

[*1] La was less than one-third (40 mm) of the belt width Bw (120 mm).

[*2] The tire radial-direction inner end of the reinforcing layer was positioned on the tire radial-direction inner side than the tire maximum width position P.

[*3] The tire radial-direction inner end of the reinforcing layer was sandwiched between the ply main body and the ply turn-up portion of the carcass ply.

[*4] The tire radial-direction outer end of the reinforcing layer was positioned at 10 mm from the tire width-direction end of the belt layer on the tire width-direction outer side. As a result, La was 0 mm and Lb was 0 mm.

[Table 6]

|  |  | Comparative Example 5 |
|---|---|---|
| Core-portion polymer (A) | Material | 66 nylon[*5] |
|  | Melting point (°C) | 265 |
| Sheath-portion material mixture (B) | Sheath resin material 1 | - |
|  | (parts by mass) | - |
|  | Sheath resin material 2 | - |
|  | (parts by mass) | - |
|  | Styrene-based elastomer | - |
|  | (parts by mass) | - |
|  | Vulcanization accelerator | - |
|  | (parts by mass) | - |
|  | Vulcanization accelerating aid |  |
|  | (parts by mass) | - |
|  | Filler | - |
|  | (parts by mass) | - |
| Spinneret for spinning | Shape | - |
|  | Orifice size (mm) | - |
| Sheath/core composite ratio |  | - |
| Spinning temperature | Core portion (°C) |  |
|  | Sheath portion (°C) |  |
| Take-up rate (m/min) |  | - |
| Stretching method |  | - |
|  |  | - |
| Fineness (dtex) |  | 945 |
| Cord form |  | twisted cord |
| Orientation angle of reinforcing layer (angle with respect to the tire radial direction) (°) |  | 45 |
| Reinforcing position (inside/outside of ply) |  | outside of ply |
| Reinforcing layer arrangement conditions | La | 11 |
|  | Lb | 15 |
|  | Lc | 25 |
|  | Lb - La | 4 |
|  | Lc - Lb | 10 |
|  | sandwiching between 2A and 2B | none |
| Drum running distance (index) |  | 85 |
| Rolling resistance (index) |  | 101.1 |

[*5] Tire cord made of 66 nylon, disclosed in Example 5 of Japanese Unexamined Patent Application Publication No. 2009-184563

As shown in Tables above, according to the present invention, a pneumatic tire in which, through suppression of crack generation from an end surface of a reinforcing layer, not only the durability is further improved as compared to conventional tires but also the rolling resistance is reduced, can be realized.

FIG. 4 provides a photograph taken under a fluorescence microscope, showing a cross-section obtained by inserting one example of the core-sheath type composite monofilament according to the present invention into a rubber, vulcanizing the resultant at 160°C for a short period of 3 minutes, and then cutting the thus obtained rubber-fiber composite in the monofilament extending direction (cord direction). As shown in this photograph, in the cut end portion of the vulcanized core-sheath type resin body, a cut-end surface of the high-melting-point resin of the white core portion is embedded in the black rubber, and a rubber-resin composite, in which the low-melting-point resin material (B) of the sheath portion is fused with the rubber in a state of being fluidized and covering the high-melting-point resin (A), is formed.

With regard to the vulcanization conditions of rubber articles, for example, at a vulcanization temperature of 160°C, vulcanization is usually performed for 5 minutes or longer so as to attain a sufficient sulfur crosslinking density by rubber vulcanization. Therefore, the vulcanization conditions (at 160°C for a short period of 3 minutes) used for taking the above-described photograph correspond to the early stage of vulcanization, and it is presumed that, under such conditions, the low-melting-point resin of the sheath portion was fluidized by heating before the members were press-bonded in such a manner that the air trapped in the gaps between the members was removed by pressurization and the gaps were consequently eliminated, whereby the low-melting-point resin was allowed to infiltrate into the gaps between the rubber and the high-melting-point resin of the core portion at the cut-end surface and to thereby cover the cut surface.

DESCRIPTION OF SYMBOLS

1: bead core
2: carcass ply
2A: ply main body
2B: ply turn-up portion
3, 3A, 3B: belt layer
3e: tire width-direction end of belt layer
4: reinforcing layer
4a: tire radial-direction outer end of reinforcing layer
4b: tire radial-direction inner end of reinforcing layer
4x: tire width-direction outermost point of a region where reinforcing layer is sandwiched between belt layer and carcass ply
5: bead filler
10: pneumatic tire
11: bead portion
12: side wall portion
13: tread portion
14: shoulder portion
21, 23: passage hole
22, 24: inserter cap
P: tire maximum width position

**Claims**

1. A pneumatic tire comprising:

    a pair of bead portions in each of which a bead core is embedded;
    a pair of side wall portions continuously extending on a tire radial-direction outer side from the respective bead portions; and
    a tread portion that extends between the pair of the side wall portions and forms a ground-contacting portion, wherein
    the pneumatic tire further comprises at least one carcass ply that toroidally extends between the pair of the bead cores, and at least one belt layer arranged on the tire radial-direction outer side of the carcass ply in a crown portion,
    a reinforcing layer extending along the carcass ply toward an inner side of a tire radial direction is arranged on a tire radial-direction inner side of the belt layer in an end region of the tread portion; and
core-sheath type composite fibers (C), whose core portion is composed of a high-melting-point resin (A) having a melting point of 150°C or higher and sheath portion is composed of a resin material (B) that contains an olefin-based polymer (D) having a melting point of not higher than a tire vulcanization temperature, are embedded in the reinforcing layer.

2. The pneumatic tire according to claim 1, wherein the olefin-based polymer (D) comprises at least one component selected from the group consisting of a propylene-$\alpha$-olefin copolymer (H), a propylene-nonconjugated diene copolymer (I), an ionomer (J) in which an olefin-based copolymer containing a monomer of an unsaturated carboxylic acid or an anhydride thereof has a degree of neutralization with a metal salt of 20% or higher, and an olefin-based homopolymer (K).

3. The pneumatic tire according to claim 1 or 2, wherein the resin material (B) comprises: the olefin-based polymer (D); and at least one selected from a styrene-based elastomer (L) containing a monomolecular chain in which mainly styrene monomers are arranged in series, a vulcanization accelerator (M), a vulcanization accelerating aid (N), and a filler (O).

4. The pneumatic tire according to claim 3, wherein the styrene-based elastomer (L) comprises a styrene-based block copolymer, or a hydrogenation product or modification product thereof.

5. The pneumatic tire according to any one of claims 1 to 4, wherein the high-melting-point resin (A) comprises a polymer selected from a polyolefin resin (P) and a polyester resin (Q), which have a melting point of 150°C or higher.

6. The pneumatic tire according to any one of claims 1 to 5, wherein the composite fibers (C) have a fineness of 50 to 4,000 dtex.

7. The pneumatic tire according to any one of claims 1 to 6, wherein an end count of the composite fibers (C) is 5 to 65 fibers/50 mm.

8. The pneumatic tire according to any one of claims 1 to 7, wherein a tire radial-direction outer end of the reinforcing layer is positioned between the belt layer in the end region of the tread portion and the carcass ply, and a tire radial-direction inner end of the reinforcing layer is arranged on the tire radial-direction outer side than a tire maximum width position P.

9. The pneumatic tire according to any one of claims 1 to 8, wherein a length La (mm) along the reinforcing layer from the tire radial-direction outer end of the reinforcing layer to a tire width-direction outermost point of a region where the reinforcing layer is sandwiched between the belt layer and the carcass ply, a length Lb (mm) along the reinforcing layer from the tire radial-direction outer end of the reinforcing layer to a tire width-direction end of the belt layer, a length Lc (mm) along the reinforcing layer from the tire radial-direction outer end of the reinforcing layer to the tire radial-direction inner end of the reinforcing layer, and a belt width Bw (mm) along a belt that is the innermost belt of the belt layer and adjacent to the carcass ply satisfy the following Formulae (1) to (4):

$$0 < \mathrm{La} < \mathrm{Bw} \times 1/3 \qquad (1);$$

$$\mathrm{Lb} > 0 \qquad (2);$$

$$\mathrm{Lc} \geq 10 \qquad (3);$$

and

$$(\mathrm{Lc} - \mathrm{Lb}) \leq 50 \ \mathrm{mm} \qquad (4).$$

FIG. 1

FIG. 2

FIG. 3

FIG. 4

FIG. 5A

FIG. 5B

FIG. 6A

FIG. 6B

**INTERNATIONAL SEARCH REPORT**

| International application No. |
| --- |
| PCT/JP2018/006371 |

A. CLASSIFICATION OF SUBJECT MATTER
Int. Cl. B60C9/00(2006.01)i, D01F8/06(2006.01)i

According to International Patent Classification (IPC) or to both national classification and IPC

B. FIELDS SEARCHED

Minimum documentation searched (classification system followed by classification symbols)
Int. Cl. B60C9/00-9/17, D01F8/06, D02G3/36-3/38

Documentation searched other than minimum documentation to the extent that such documents are included in the fields searched
Published examined utility model applications of Japan    1922-1996
Published unexamined utility model applications of Japan  1971-2018
Registered utility model specifications of Japan         1996-2018
Published registered utility model applications of Japan  1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2015/156405 A1 (BRIDGESTONE CORP.) 15 October 2015, claims, paragraphs [0001], [0006]-[0009], [0012], [0015]-[0018], [0024], [0025], [0027]-[0044], [0065]-[0092] & US 2017/0028793 A1, claims, paragraphs [0001], [0008], [0009], [0013], [0026]-[0029], [0035], [0036], [0038]-[0102] & EP 3130478 A1 & CN 106163827 A | 1-9 |
| Y | JP 2002-137607 A (FUJI BELLOWS CO., LTD.) 14 May 2002, paragraphs [0001], [0006], [0007], [0017]-[0020], [0034]-[0036], [0054], [0055], fig. 5-11 (Family: none) | 1-9 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15.05.2018 | 29.05.2018 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

| | International application No. |
|---|---|
| | PCT/JP2018/006371 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2003-237315 A (FUJI BELLOWS CO., LTD.) 27 August 2003, paragraphs [0001], [0006]-[0014], [0019], [0042]-[0047], [0053], [0059], [0065], fig. 4-14 (Family: none) | 1-9 |
| Y | JP 1-317803 A (THE YOKOHAMA RUBBER CO., LTD.) 22 December 1989, page 3, upper right column, lines 1-10, page 3, lower right column, line 17 to page 4, upper left column, line 3, page 5, lower left column, line 3 to lower right column, line 6, page 9, upper right column, table 1, fig. 1-4 (Family: none) | 1-9 |
| Y | JP 1-317804 A (THE YOKOHAMA RUBBER CO., LTD.) 22 December 1989, page 3, upper left column, lines 3-9, page 4, upper left column, lines 13-19, page 4, lower left column, lines 6-12, fig. 1, 2 (Family: none) | 1-9 |
| A | JP 2009-286269 A (THE YOKOHAMA RUBBER CO., LTD.) 10 December 2009, entire text, all drawings (Family: none) | 1-9 |
| A | JP 8-40024 A (BRIDGESTONE CORP.) 13 February 1996, entire text, all drawings (Family: none) | 1-9 |
| A | JP 10-6406 A (THE YOKOHAMA RUBBER CO., LTD.) 13 January 1998, entire text, all drawings (Family: none) | 1-9 |
| A | WO 2016/156263 A1 (COMPAGNIE GENERALE DES ETABLISSEMENTS MICHELIN) 06 October 2016, entire text, all drawings & FR 3034435 A & CN 107531095 A | 1-9 |
| P, A | WO 2017/065304 A1 (BRIDGESTONE CORP.) 20 April 2017, entire text, all drawings (Family: none) | 1-9 |
| P, A | WO 2017/065305 A1 (BRIDGESTONE CORP.) 20 April 2017, entire text, all drawings (Family: none) | 1-9 |
| P, A | JP 2017-74855 A (BRIDGESTONE CORP.) 20 April 2017, entire text, all drawings (Family: none) | 1-9 |

Form PCT/ISA/210 (continuation of second sheet) (January 2015)

**EP 3 587 142 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009513429 A
- JP H106406 A
- WO 2010119861 A
- JP 2006027068 A
- JP 5745952 B
- JP 2009184563 A

**Non-patent literature cited in the description**

- Handbook of Fibers. Maruzen Co., Ltd, 25 March 1994, 207